# EUROPEAN PATENT SPECIFICATION

(11) **EP 3 330 781 B1**
(45) Date of publication and mention of the grant of the patent: **19.06.2019**
(21) Application number: 17192795.7
(22) Date of filing: 25.09.2017
(51) Int. Cl.: G02F 1/1333

(54) **MOLD FRAME, DISPLAY DEVICE INCLUDING THE SAME AND METHOD OF ASSEMBLING THE DISPLAY DEVICE**
FORMRAHMEN, ANZEIGEVORRICHTUNG DAMIT UND VERFAHREN ZUR MONTAGE DER ANZEIGEVORRICHTUNG
CADRE MOULÉ, AFFICHEUR LE COMPRENANT ET PROCÉDÉ D'ASSEMBLAGE DE L'AFFICHEUR

(30) Priority: 02.12.2016 KR 20160163353
(43) Date of publication of application: 06.06.2018
(73) Proprietor: Samsung Display Co., Ltd., Gyeonggi-do 17113 (KR)
(72) Inventor: Kim, Ju Hwan, Gangnam-gu, Seoul (KR); Kang, Gi Young, 108-1405 Seobuk-gu, Cheonan-si, Chungcheongnam-do (KR); Shin, Sang Kyo, 302-3302 Asan-si, Chungcheongnam-do (KR); Lee, Hyun Woo, Yeongdeungpo-gu, Seoul (KR)
(74) Representative: Dr. Weitzel & Partner

(56) References cited:
- US-A1- 2011 236 643
- US-A1- 2014 198 521
- US-A1- 2016 077 372

## Description

### BACKGROUND

### 1. Field

Embodiments of the invention relate to a mold frame, a display device including the mold frame, and a method of assembling the display device.

### 2. Description of the Related Art

A liquid crystal display device and an organic light-emitting display device are one of the most widely used types of display device. The liquid crystal display device typically includes a display panel, which includes two substrates provided with field generating electrodes such as a pixel electrode and a common electrode, and a liquid crystal layer interposed between the two substrates, and a backlight unit which includes a light source and a light guide plate to provide light to the display panel.

A method including coupling the display panel and the mold frame, which stably supports the display panel, and coupling the mold frame with a bottom chassis in which a backlight unit is stored, may be used for tightly coupling the display panel and the backlight unit. Generally, the display panel and the mold frame may be coupled with each other using a double-side tape or a thermosetting resin.

Prior art document US 20140198521 A1 discloses a display device comprising a mold frame with stepped side-walls receiving optical sheets and a display panel.

### SUMMARY

However, since the double-sided tape used for coupling the display panel and the mold frame has a relatively lower coupling force than that of an adhesive made of the thermosetting resin, the display panel and the mold frame coupled via the double-sided tape may be vulnerable to external impact, and sensitive to temperature and humidity such that the double-side tape may cause a joining failure and a light leakage failure.

Further, if the adhesive made of a thermosetting resin is used for the coupling the display panel and the mold frame, as the display device is exposed for a long time at a high temperature to sufficiently cure the adhesive, components of the display panel and the backlight unit may be damaged by such heat, which may cause degradation of display quality.

In addition, recently, there has been an attempt to minimize an area of a bezel portion which surrounds the edges of the display device. As the area of the bezel portion decreases, a joining area in which the display panel and the mold frame are coupled is not sufficiently secured, and thus, such a problem may be further intensified.

Embodiments of the invention relate to a display device having a new joining structure between a display panel and a mold frame, and a mold frame for the display device.

Embodiments of the invention relate to a method of assembling a display device for achieving a new joining structure between the display panel and the mold frame.

According to an exemplary embodiment of the invention, a display device includes: a display panel; a mold frame which supports the display panel, where the mold frame includes a frame body including a recessed portion, and a first light-transmit member extending in a first direction and at least partially inserted into the recessed portion; and a joining member which couples the display panel and the mold frame to each, where the first light-transmit member and the joining member at least partially overlap each other.

The joining member is made from a photocurable material, especially a photocurable resin composition, and the first light-transmit member especially provides a light path for radiating light from the outside of the mold frame to the joining member to cure the joining member and to thereby couple the display panel and the mold frame respectively to provide a sufficient coupling force between the display panel and the mold frame.

In an exemplary embodiment, the display panel may comprise a light-shielding pattern disposed in an edge portion thereof, and the first light-transmit member, the joining member and the light-shielding pattern may at least partially overlap one another.

In an exemplary embodiment, the first light-transmit member may have a bar shape extending in the first direction, the first light-transmit member may abut directly on the frame body, and the upper surface of the first light-transmit member may be aligned with the upper surface of the frame body on a same plane to define a flat surface.

In an exemplary embodiment, the first light-transmit member and the frame body may include different materials from each other.

In an exemplary embodiment, an optical density of the first light-transmit member may be less than an optical density of the frame body, and a refractive index of the first light-transmit member may be greater than a refractive index of the frame body, and the refractive index of the first light-transmit member may be less than a refractive index of the joining member.

In an exemplary embodiment, the frame body may include plastic, nonmetallic inorganic material or carbon fiber, the first light-transmit member may include polycarbonate, polystyrene, polymethyl methacrylate, polyethylene terephthalate, glass or quartz, and the joining member may include a photocurable resin, and the first light-transmit member abuts directly on the joining member.

In an exemplary embodiment, the frame body may include: side wall portions, and protruding portions extending from the side wall portions to support the display panel, where the recessed portion extending in the first direction may be defined on an upper surface of the protruding portion, and the upper surface of the first light-transmit member may be exposed without being covered with the frame body.

In an exemplary embodiment, the first light-transmit member may abut directly on the frame body, and a roughness of a surface of the first light-transmit member, which contacts the frame body, is greater than a roughness of the upper surface of the first light-transmit member.

In an exemplary embodiment, side surfaces of the first light-transmit member may be in contact with the frame body and may have a slope.

In an exemplary embodiment, one front end (also called side surface herein) of the first light-transmit member extending in the first directionmay be at least partially exposed without being covered with the frame body, the other front end (also called side surface herein) of the first light-transmit member extending in the first direction may be at least partially exposed without being covered with the frame body, the first light-transmit member comprises light-emitting patterns defined on a lower surface, and an arrangement density of the light-emitting patterns at a central portion of the first light-transmit member may be greater than an arrangement density of the light-emitting patterns at an edge portion of the first light-transmit member. When used herein, the term without being covered with the frame body means that the respective at least partially exposed end is free of cover with the frame body.

In an exemplary embodiment, one front end of the first light-transmit member extending in the first direction may be at least partially exposed without being covered with the frame body, the other front end of the first light-transmit member extending in the first direction may be at least partially exposed, without being covered with the frame body, and thicknesses of the one front end and the other front end of the first light-transmit member may be larger than a thickness of a central portion of the first light-transmit member.

In an exemplary embodiment, one front end of the first light-transmit member extending in the first direction may be at least partially exposed without being covered with the frame body, the other front end of the first light-transmit member extending in the first direction may be not exposed by being covered with the frame body, the first light-transmit member may comprise light-emitting patterns formed on a lower surface, the arrangement density of the light-emitting patterns in a vicinity of the other front end of the first light-transmit member may be greater than the arrangement density of the light-emitting patterns in a vicinity of the one front end of the first light-transmit member.

In an exemplary embodiment, one front end of the first light-transmit member extending in the first direction may be at least partially exposed without being covered with the frame body, the other front end of the first light-transmit member extending in the first direction may be covered with the frame body, and the thickness of the one front end of the first light-transmit member may be larger than the thickness of the other front end of the first light-transmit member.

In an exemplary embodiment, one front end of the first light-transmit member extending in the first direction may be at least partially exposed without being covered with the frame body, and an exposed side surface of the first light-transmit member at the one front end may be aligned with an outer surface of the side wall portions of the frame body on a same plane to define a flat surface.

In an exemplary embodiment, the mold frame may further include: a second light-transmit member extending in a second direction intersecting with the first direction, at least partially inserted in the recessed portion, and connected to the first light-transmit member, and a reflecting member which reflects light proceeding in the first direction within the first light-transmit member and allows the light to be incident on the second light-transmit member, where the upper surface of the second light-transmit member may be exposed without being covered with the frame body.

According to an exemplary embodiment of the invention, a mold includes: a frame body which comprises side wall portions and protruding portions extending from inner walls of the side wall portions; and a light-transmit member disposed on the frame body and including a material different from a material of the frame body, where at least a part of side surfaces and an upper surface of the light-transmit member are exposed without being covered with the frame body.

According to an exemplary embodiment of the invention, a method of assembling a display device includes: disposing a display panel on top of a mold frame; providing a photocurable resin composition between the mold frame and the display panel, where the mold frame includes side wall portions, protruding portions extending from the side wall portions and including a recessed portion defined on a top surface thereof, and a light-transmit member at least partially inserted in the recessed portion, and the photocurable composition at least partly overlaps the light-transmit member; and guiding light through the light-transmit member to cure the photocurable resin composition.

In an exemplary embodiment, the light-transmit member may extend in a first direction, at least a part of side surfaces and the upper surface of the light-transmit member may be exposed without being covered with the side wall portions and the protruding portion, and the guiding the light through the light-transmit member to cure the photocurable resin composition may include: emitting light into the light-transmit member through the side surfaces of the light-transmit member, guiding at least a part of the light entered into the light-transmit member in the first direction through the light-transmit member, and emitting at least a part of the light through the upper surface of the light-transmit member to cure the photocurable resin composition.

In an exemplary embodiment, the method may further includes: coupling the mold frame with a bottom chassis in which a light guide plate and a light source are stored, prior to the disposing the display panel on top of the mold frame and the providing the photocurable resin composition between the mold frame and the display panel.

In an exemplary embodiment, the method may further include: coupling the mold frame with a bottom chassis in which a light guide plate and a light source are stored, after the guiding the light through the light-transmit member to cure the photocurable resin composition.

Embodiments of a display device according to the invention use a photocurable resin as a joining member, by disposing a light-transmit member disposed at a position overlapping a joining member for coupling the display panel and the mold frame, and by providing a route through which light irradiated from an outside of the mold frame may proceed.

Accordingly, in such embodiment, a display device may have high durability without being damaged by heat, and the size (e.g., the width) of the bezel portion of the display device may be substantially minimized.

### BRIEF DESCRIPTION OF THE DRAWINGS

The above and other aspects and features of the invention will become more apparent by describing in detail exemplary embodiments thereof with reference to the attached drawings, in which:
FIG. 1 is an exploded perspective view of a display device according to an embodiment of the invention;
FIG. 2 is an enlarged perspective view showing a portion of a mold frame of FIG. 1;
FIG. 3 is a plan view of the mold frame of FIG. 1;
FIG. 4 is a cross-sectional view taken along line IV-IV' of FIG. 1;
FIG. 5 is a cross-sectional view taken along line V-V' of FIG. 1;
FIG. 6 is a cross-sectional view of a display device according to an alternative embodiment of the invention;
FIG. 7 is a cross-sectional view of a display device according to another alternative embodiment of the invention;
FIGS. 8A, 8B, 9A and 9B are cross-sectional views of a display device according to still another alternative embodiment of the invention;
FIG. 10 is a cross-sectional view of a display device according to still another alternative embodiment of the invention;
FIGS. 11 and 12 are plan and cross-sectional views, respectively, of a display device according to still another alternative embodiment of the invention;
FIG. 13 is a cross-sectional view of a display device according to still another alternative embodiment of the invention;
FIG. 14 is a cross-sectional view of a display device according to still another alternative embodiment of the invention;
FIG. 15 is a cross-sectional view of a display device according to still another alternative embodiment of the invention;
FIG. 16 is a plan view of a mold frame according to an alternative embodiment of the invention;
FIG. 17 is a flowchart illustrating a method of assembling a display device according to an embodiment of the invention;
FIGS. 18 to 20 are cross-sectional views illustrating the method of assembling the display device of FIG. 17;
FIG. 21 is a flowchart illustrating a method of assembling a display device according to an alternative embodiment of the invention; and
FIGS. 22 to 24 are cross-sectional views illustrating the method of assembling the display device of FIG. 21.

### DETAILED DESCRIPTION

Features of the inventive concept and methods of accomplishing the same may be understood more readily by reference to the following detailed description of preferred embodiments and the accompanying drawings.

The inventive concept may, however, be embodied in many different forms and should not be construed as being limited to the embodiments set forth herein. Rather, these embodiments are provided so that this disclosure will be thorough and complete and will fully convey the concept of the inventive concept to those skilled in the art, and the inventive concept will only be defined by the appended claims.

In the drawings, the thickness of layers and regions are exaggerated for clarity. It will be understood that when an element or layer is referred to as being "on," "connected to" or "coupled to" another element or layer, the element or layer can be directly on, connected or coupled to another element or layer or intervening elements or layers. In contrast, when an element is referred to as being "directly on," "directly connected to" or "directly coupled to" another element or layer, there are no intervening elements or layers present. As used herein, connected may refer to elements being physically, electrically and/or fluidly connected to each other.

Like numbers refer to like elements throughout. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the invention.

Spatially relative terms, such as "bottom," "below," "lower," "under," "above," "upper," "top" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "below" or "beneath" relative to other elements or features would then be oriented "above" relative to the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising," "includes" and/or "including," when used in this specification, specify the presence of stated features, integers, operations, elements, and/or components, but do not preclude the presence or addition of one or more other features, integers, steps, operations, elements, components, and/or groups thereof.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value."

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the claims.

In the specification, a first direction X means an arbitrary one direction in a plane, a second direction Y means a direction intersecting with the first direction X within the plane, and a third direction Z means a direction perpendicular to the plane.

Hereinafter, embodiments of the invention will be described with reference to the accompanying drawings.

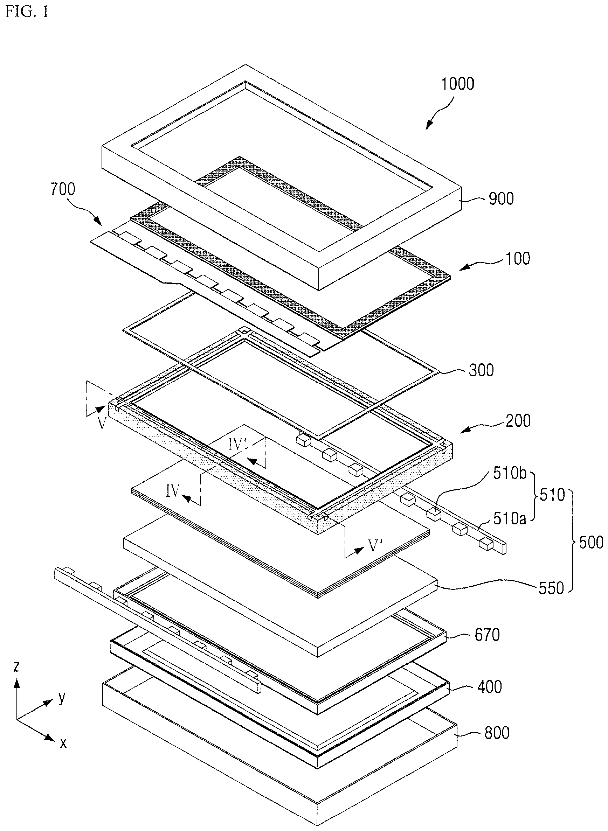

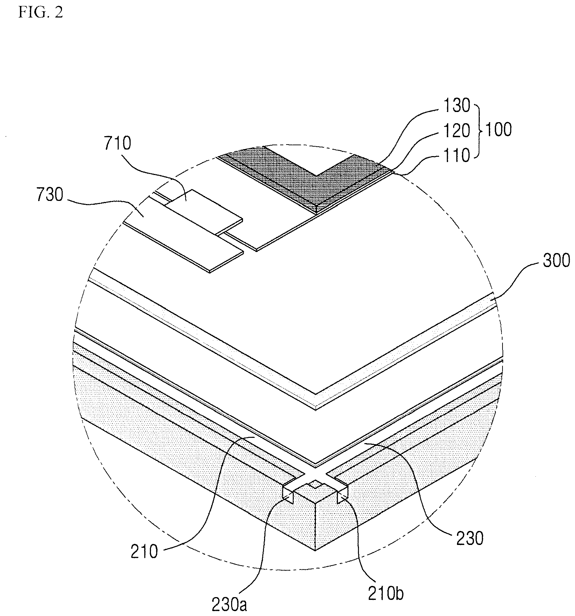

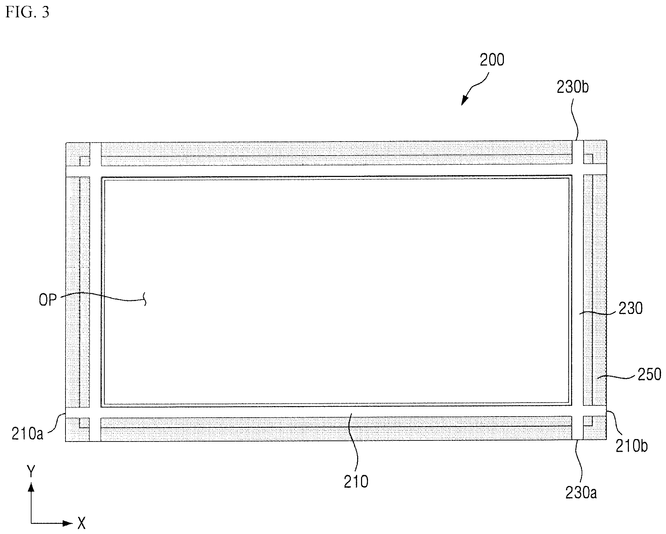

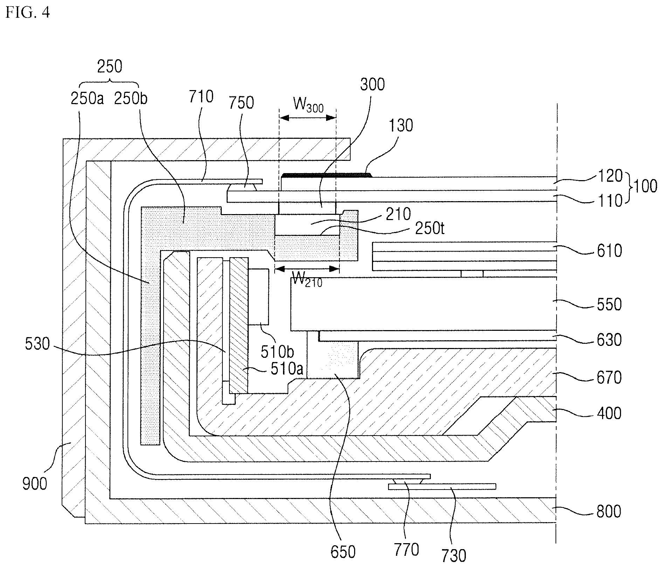

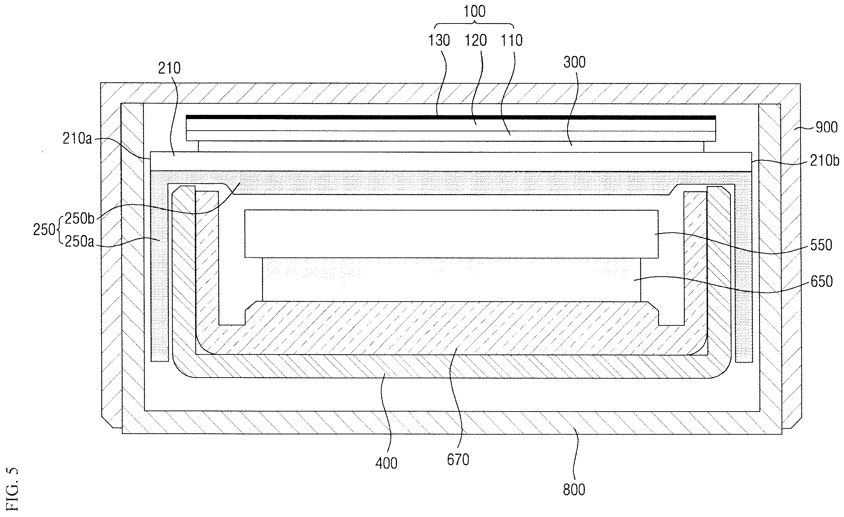

FIG. 1 is an exploded perspective view of a display device according to an embodiment of the invention. FIG. 2 is an enlarged perspective view showing a portion of a mold frame of FIG. 1. FIG. 3 is a plan view of the mold frame of FIG. 1. FIG. 4 is a cross-sectional view taken along line IV-IV' of FIG. 1. FIG. 5 is a cross-sectional view taken along line V-V' of FIG. 1.

Referring to FIGS. 1 through 5, an embodiment of a display device 1000 includes a display panel 100 which displays images, a mold frame 200 which provides a predetermined upper surface area for stably supporting the display panel 100, and a joining member 300 which joins the display panel 100 and the mold frame 200.

The display panel 100 may be a liquid crystal display panel, an electrophoretic display panel, an organic light emitting display panel, a plasma display panel or the like. Hereinafter, for convenience of description, exemplary embodiments where the display panel 100 is a liquid crystal display panel will be described in detail, but the invention is not limited thereto.

The display panel 100 may include a lower substrate 110 and an upper substrate 120, and may further include a liquid crystal layer (not illustrated) interposed therebetween. In an exemplary embodiment, the lower substrate 110 is a substrate on which switching elements (not illustrated) are arranged, and a planar area of the lower substrate 110 may be smaller than a planar area of the upper substrate 120. In an alternative embodiment, the planar area of the upper substrate may be larger than the planar area of the lower substrate.

In an embodiment, the display panel 100 may include a display region and a non-display region. The display region is a region in which a plurality of pixels for displaying an image is defined, and the non-display region is a region in which no image is displayed. When viewed from a top plan view, the display region may be surrounded by the non-display region. In the non-display region, a pad part connected to a driving circuit and/or a driving element is located, and the pad part may be connected to a driving circuit unit 700.

In an embodiment, as shown in FIG. 2, a light-shielding pattern 130 may be disposed in at least a part of the non-display region. The light-shielding pattern 130 may have a rectangular band shape which surrounds the edge portions of the display panel 100. The light-shielding pattern 130 may include a material that at least absorbs or reflects light of a specific wavelength band and blocks the light transmission. The light-shielding pattern 130 may effectively prevent occurrence of unintended light leakage defects due to light being transmitted through the non-display region, and may effectively prevent the internal components from being visually recognized from the outside. In an embodiment, as shown in FIGS. 1 to 5, the light-shielding pattern 130 is disposed on the upper substrate 120, but the invention is not limited thereto. Alternatively, the light-shielding pattern 130 may be disposed between the lower substrate 110 and the upper substrate 120, or disposed under the lower substrate 110, or may be disposed by being included in the lower substrate 110 or the upper substrate 120.

The mold frame 200 is disposed under the display panel 100 to support and fix the display panel 100. In an exemplary embodiment, the mold frame 200 includes a frame body 250 having an approximately rectangular band shape, and a first light-transmit member 210 disposed on the frame body 250. In some embodiments, the mold frame 200 has a rectangular band shape including a pair of long sides (horizontal sides in FIG. 3) and a pair of short sides (vertical sides in FIG. 3). The portions including the long sides and the portions including the short sides of the mold frame 200 may be in the form of being separately manufactured and assembled. In one embodiment, for example, one long side and one short side may be fitted together or screwed together to be integrated with each other.

The frame body 250 may have an approximately rectangular band shape on a plane in which an opening OP is defined at the center. In one embodiment, for example, the frame body 250 may include side wall portions 250a of a substantially rectangular band shape, and a protruding portion 250b extending from the inner wall of the side wall portions 250a in the direction (i.e., an inward direction) of the opening OP. The protruding portion 250b of the frame body 250 may be a support which supports the display panel 100 with a predetermined upper surface area. The protruding portion 250b may at least partially overlap the edge portion of the display panel 100. A recessed portion 250t is defined on the upper surface of the protruding portion 250b. The recessed portion 250t is a trench having two facing inner walls and a base surface. The recessed portion 250t may extend in a first direction X (e.g., the horizontal direction) and a second direction Y (e.g., the vertical direction), and may have a substantially rectangular band shape on a plane.

The side wall portions 250a and the protruding portion 250b may be integrally formed as a single unitary and indivisible unit without a physical boundary. The frame body 250 may include or be made of plastic such as polycarbonate, nonmetallic inorganic material or carbon fiber. The frame body 250 may include or be made of an opaque material to prevent a light leakage failure. In one embodiment, for example, the optical density of the frame body 250 may be equal to or greater than about 0.3, equal to or greater than about 0.5, or equal to or greater than about 0.7, but is not limited thereto. As used herein, the optical density means a log value of intensity of incident light to intensity of transmitted light.

The first light-transmit member 210 extends in the first direction X and may have an approximately bar shape. The first light-transmit member 210 is at least partially inserted in the recessed portion 250t of the frame body 250. The first light-transmit member 210 may at least partially overlap the light-shielding pattern 130. When the frame body 250 have a rectangular band shape having a long side in the first direction X and a short side in the second direction Y on the plane, the first light-transmit member 210 may be located on the long side of the frame body 250. In one embodiment, for example, the cross-sectional shape of the first light-transmit member 210 may be a shape corresponding to the recessed portion 250t. In an embodiment, as shown in FIG. 4, the cross-sectional shape of the first light-transmit member 210 perpendicularly cut in the extending direction is an approximately square, but not being limited thereto. Alternatively, the cross-sectional shape of the first light-transmit member 210 may be a polygon such as a triangle, or the side surfaces of the first light-transmit member 210 may include a curved surface.

When the recessed portion 250t is defined or formed on the upper surface of the protruding portion 250b, the upper surface of the first light-transmit member 210 may be exposed without being covered with the frame body 250. In an exemplary embodiment, the upper surface of the first light-transmit member 210 may be aligned with the upper surface of the protruding portion 250b of the frame body 250 to form a flat surface. In one embodiment, for example, the thickness of the first light-transmit member 210 may be substantially the same as the depth of the recessed portion 250t. The first light-transmit member 210 may at least partially abut on the frame body 250. In one embodiment, for example, at least a part of the side surfaces and the lower surface of the first light-transmit member 210 may abut on the frame body 250. In an alternative embodiment, a reflective layer (not illustrated) may be further disposed between the lower surface of the first light-transmit member 210 and the base surface (e.g., an upper surface) of the recessed portion 250t of the frame body 250.

In an exemplary embodiment, at least a part of the side surfaces of the first light-transmit member 210 may be exposed without being covered with the frame body 250. In one embodiment, for example, a side surface 210a located at one end of the first light-transmit member 210 in the first direction X may be exposed without being covered with the frame body 250. In such an embodiment, the side surface 210a located at one end in the first direction X may be aligned with the outer surface of the side wall portions 250a of the frame body 250 to form a flat surface, but the invention is not limited thereto.

In an exemplary embodiment, a side surface 210b located at the other end of the first light-transmit member 210 in the first direction X may be exposed without being covered with the frame body 250. The side surface 210b located at the other end in the first direction X may be aligned with the outer side surfaces of the side wall portions 250a of the frame body 250 to form a flat surface, but the invention is not limited thereto.

The length of the first light-transmit member 210 in the first direction X may be substantially the same as the length of the frame body 250 in the first direction X. The side surfaces 210a and 210b of the first light-transmit member 210 exposed without being covered with the frame body 250 may form light incident portions of light which is incident to cure the joining member 300 in a method for assembling a display device to be described later.

The first light-transmit member 210 includes or is made of a material different from a material of the frame body 250. In one embodiment, for example, the first light-transmit member 210 may be made of a material having light transmittance relatively higher than light transmittance of the frame body 250. In such an embodiment, the optical density of the first light-transmit member 210 may be smaller than the optical density of the frame body 250. The material of the first light-transmit member 210 is not particularly limited as long as it has a high light transmittance, but the first light-transmit member, for example, may be formed of polycarbonate, polystyrene, polymethyl methacrylate, polyethylene terephthalate, glass, quartz or the like. In some embodiments, the refractive index of the first light-transmit member 210 may be greater than the refractive index of the frame body 250. The refractive index of the first light-transmit member 210 may be greater than about 1.0, equal to or greater than about 1.05, equal to or greater than about 1.1, equal to or greater than about 1.2, or equal to or greater than about 1.5, but is not limited thereto. In an embodiment of the method of assembling the display device to be described later, the incident light (e.g., the light entered into the first light-transmit member 210) may be easily reflected and/or totally reflected through an interface between the first light-transmit member 210 and the frame body 250 by setting the refractive index of the first light-transmit member 210 to be greater than the refractive index of the frame body 250.

In an exemplary embodiment, the mold frame 200 may further include a second light-transmit member 230 extending in the second direction Y. The second light-transmit member 230 may be at least partially inserted into the recessed portion of the frame body 250. The second light-transmit member 230 may at least partially overlap the light-shielding pattern 130. The second light-transmit member 230 may be located on the short side of the frame body 250. The second light-transmit member 230 includes or is made of the same material as the first light-transmit member 210, and may be connected to the first light-transmit member 210. The upper surface of the first light-transmit member 210 and the upper surface of the second light-transmit member 230 may be located at the same level or on a same plane.

At least a part of the side surfaces of the second light-transmit member 230 may be exposed, without being covered with the frame body 250. In an embodiment, the side surface 230a located at one end of the second light-transmit member 230 in the second direction Y may be exposed, without being covered with the frame body 250. In such an embodiment, the side surface 230a located at the one end in the second direction Y may be aligned with the outer side surfaces of the side wall portions 250a of the frame body 250 on a same plane to form a flat surface, but the invention is not limited thereto.

In an embodiment, the side surface 230b located at the other end of the second light-transmit member 230 in the second direction Y may be exposed, without being covered with the frame body 250. The side surface 230b located at the other end in the second direction Y may be aligned with the outer side surfaces of the side wall portions 250a of the frame body 250 on a same plane to form a flat surface.

The length of the second light-transmit member 230 in the second direction Y may be substantially the same as the length of the frame body 250 in the second direction Y. The side surfaces 230a and 230b of the second light-transmit member 230 exposed without being covered with the frame body 250 may form a light incident portion in a method of assembling a display device to be described later.

The joining member 300 couples the display panel 100 and the mold frame 200 to each other. In one embodiment, for example, the joining member 300 may have a rectangular band shape on a plane. The joining member 300 may abut directly on the lower surface of the lower substrate 110 of the display panel 100 and the upper surface of the mold frame 200. The joining member 300 is not particularly limited as long as the joining member 300 effectively couples the display panel 100 and the mold frame 200 to each other. The joining member includes an adhesive including a photocurable resin. In some embodiments, the joining member 300 may be an adhesive including a thermosetting resin and a photocurable resin. In some embodiments, the refractive index of the joining member 300 may be smaller than the refractive index of the first light-transmit member 210. In an embodiment of assembling method of the display device to described later, the incident light may be easily reflected and/or totally reflected through the interface between the first light-transmit member 210 and the joining member 300 by setting the refractive index of the joining member 300 to be less than the refractive index of the first light-transmit member 210.

In an exemplary embodiment, the joining member 300 may at least partially overlap the first light-transmit member 210. In such an embodiment, a width W₃₀₀ of the joining member 300 may be smaller than a width W₂₁₀ of the first light-transmit member 210. The widths refer to widths in a direction across the upper surface of the first light-transmit member 210 along the second direction Y, i.e. along the comparatively shorter upper surface of the first light-transmit member 210. Although the joining member 300 abuts on the first light-transmit member 210 of the mold frame 200, the joining member 300 may not abut on or directly contact the frame body 250. In an alternative embodiment, the width W₃₀₀ of the joining member 300 is smaller than the width W₂₁₀ of the first light-transmit member 210, and the joining member 300 may about on both the first light-transmit member 210 and the frame body 250. In an embodiment, where the width W₃₀₀ of the joining member 300 is smaller than the width W₂₁₀ of the first light-transmit member 210, opposing edge portions of the joining member 300 may be exposed to more light as compared to the central portion of the joining member 300, and the edge portions may be cured to a greater extent than the central portion such that the moisture or the like may be effectively prevented from entering into the interior of the joining member 300. In another alternative embodiment, the width W₃₀₀ of the joining member 300 may be substantially the same as the width W₂₁₀ of the first light-transmit member 210.

In an embodiment, the joining member 300 may at least partially overlap the light-shielding pattern 130. In some embodiments, the first light-transmit member 210, the joining member 300 and the light-shielding pattern 130 may at least partially overlap each other.

In an embodiment, as shown in FIG. 1, the display device 1000 may further include a backlight assembly 500, and a bottom chassis 400 that covers or stores the backlight assembly 500.

The backlight assembly 500 is disposed under the display panel 100 when viewed in a direction perpendicular on the display panel 100 from a viewer's point, i.e. in the third direction Z, and may provide light to the display panel 100 side. The backlight assembly 500 may include a light guide plate 550 and a light source unit 510.

The light guide plate 550 may overlap the display panel 100 and may be disposed therebelow. The light guide plate 550 may guide the light provided from the light source unit 510 and emit the light in a direction to the display panel 100. In one embodiment, for example, the side surfaces of the light source unit 510 adjacent to the light guide plate 550 may be a light incident surface, and an upper surface of the light guide plate 550 facing the display panel 100 may be a light emission surface. The material of the light guide plate 550 is not particularly limited as long as he light guide plate 550 has a high light transmittance so that light provided from the light source unit 510 may be effectively guided without loss. In one embodiment, for example, the light guide plate 550 may include or be formed of plastic or glass.

The light source unit 510 may be disposed to be adjacent to the side surfaces of the light guide plate 550. The light source unit 510 may include a light source circuit board 510a which provides signal and power source used for driving the light source 510b, and the light source 510b mounted on one side of the light source circuit board 510a. In an exemplary embodiment, the light source circuit board 510a has a shape extending in the first direction X, the light source 510b is disposed on one side of the light source circuit board 510a, and a plurality of light sources may be spaced apart from each other along the first direction X.

The light source 510b may include a light emitting diode. The light source 510b may emit white light or emit blue light, or may emit light having a wavelength band of ultraviolet light. In an embodiment, as shown in FIG. 1, the light source 510b may have an edge type structure in which a light source unit 510 for providing light is disposed to be adjacent to side surfaces of the light guide plate 550, but not being limited thereto. Alternatively, the light source unit 510 may have a direct-type structure disposed under the light guide plate 550 or a combination of the edge type structure and the direct-type structure.

The bottom chassis 400 stably supports and fixes the backlight assembly 500, and may provide a space in which the backlight assembly 500 may be stored. In one embodiment, for example, the bottom chassis 400 may have a box shape which includes a bottom portion and side wall portions extending upward from edges of the bottom portion. In an alternative exemplary embodiment, the side wall portions of the bottom chassis 400 may be brought into close contact with the side wall portions 250a of the mold frame 200. The bottom chassis 400 may include or be made of a material having a predetermined rigidity and high thermal conductivity, for example, a metal material such as stainless steel, aluminium, or an alloy thereof. In some embodiments, the bottom chassis 400 may include or be made of a material with high light reflectance.

The bottom chassis 400 may be coupled to the mold frame 200. In one embodiment, for example, the bottom chassis 400 and the mold frame 200 may be coupled through screws or hooks. Alternatively, the bottom chassis 400 and the mold frame 200 may be coupled via a double-sided adhesive tape or an adhesive.

In an embodiment, the display device 1000 may further include an optical sheet 610, a reflective sheet 630, a reinforcing member 670, a spacer 650, a driving circuit unit 700 and storage containers 800 and 900.

The optical sheet 610 may be disposed between the emission surface of the light guide plate 550 and the display panel 100. The optical sheet 610 may control or change the route and/or polarization characteristics of light proceeding from the light emission surface of the light guide plate 550 to the display panel 100, thereby improving the brightness, viewing angle characteristics, etc. of the display device 1000. In an exemplary embodiment, the optical sheet 610 may include at least one of a prism sheet, a lens sheet, a diffusion sheet and a reflective polarizing sheet.

The reflective sheet 630 may be disposed under the light guide plate 550. The reflective sheet 630 may reflect the light, which leaks downward from the light guide plate 550, to a direction of the display panel 100 such that the utilization efficiency of light provided from the light source unit 510 is enhanced, and the luminance of the display device 1000 is improved. The material of the reflective sheet 630 is not particularly limited as long as the material has high light reflectance. In one embodiment, for example, the reflective sheet 630 may include or be formed of polyethylene terephthalate or the like. In some embodiments, one side of the reflective sheet 630 may be coated with a metal oxide such as titanium oxide or a metallic material such as silver (Ag).

The reinforcing member 670 may be a bottom mold for supporting the backlight assembly 500 and aligning the position of the backlight assembly 500. The reinforcing member 670 is disposed in the bottom chassis 400 and may primarily absorb external impacts. In one embodiment, for example, the reinforcing member 670 may have a box shape which includes a bottom portion, and side wall portions extending upward from edges of the bottom portion. The light source unit 510 may be attached to the inner walls of the side wall portions of the reinforcing member 670 via a fixing member 530. Alternatively, the side wall portions of the reinforcing member 670 may be brought into close contact with the side wall portions of the bottom chassis 400. In an embodiment, the reinforcing member 670 may be a heat radiating member which includes or is made of a material having high thermal conductivity to release heat generated from the backlight assembly 500 to the outside. The reinforcing member 670 may include or be made of a metallic material such as stainless steel, aluminium or an alloy thereof. In some embodiments, the reinforcing member 670 includes or is made of a material having a high light reflectance, and may reflect the leaked light, thereby improving the utilization efficiency of light. The reinforcing member 670 may be coupled with the mold frame 200. In one embodiment, for example, the reinforcing member 670 and the mold frame 200 may be coupled to each other through screws or hooks. Alternatively, the reinforcing member 670 and the mold frame 200 may be coupled to each other, using a double-sided adhesive tape or an adhesive.

The spacer 650 may be disposed on the reinforcing member 670. The spacer 650 may be a fixing member for aligning and supporting the light guide plate 550 and the reflective sheet 630. The lower surface of the reflective sheet 630 supported by the spacer 650 may be spaced apart from the bottom of the reinforcing member 670 by a predetermined distance. In some embodiments, the spacer 650 may include at least a material that absorbs or reflects light of a particular wavelength band and blocks light transmission.

The driving circuit unit 700 may include a flexible circuit film 710, and a printed circuit board 730. The flexible circuit film 710 may include a tape carrier package. The flexible circuit film 710 may electrically connect the printed circuit board 730 and the pad portion (not illustrated) of the display panel 100. The flexible circuit film 710 includes or is made of a flexible material, e.g., a pliable material including polyimide, and is curved toward the back side of the bottom chassis 400 to cover the side surfaces of the bottom chassis 400, thereby minimizing the area on the plane occupied by the unit 700 in the display device 1000. A driving integrated circuit (not illustrated) may be disposed on one side of the flexible circuit film 710. In such an embodiment, circuit components for driving the display panel 100 may be disposed or mounted on the printed circuit board 730. The printed circuit board 730 may be located under the bottom chassis 400.

The display panel 100 and the flexible circuit film 710 are coupled to each other via the first conductive member 750, and the flexible circuit film 710 and the printed circuit board 730 may be coupled to each other via the second conductive member 770. The first conductive member 750 and the second conductive member 770 may include anisotropic conductive films. The first conductive member 750 and the second conductive member 770 may include an adhesive material including conductive particles (not illustrated). In one embodiment, for example, when the first conductive member 750 and the second conductive member 770 are subjected to pressure in the vertical direction, the first conductive member 750 and the second conductive member 770 come close to each other such that the adjacent distances between the conductive particles dispersed inside may mutually communicate with each other, and as a result, both sides subjected to pressure may be electrically connected to each other.

The storage containers 800 and 900 may contain or store the display panel 100, the mold frame 200, and the bottom chassis 400 which stores the backlight unit 500. The storage containers 800 and 900 may include or define a rear cover (here in form of the storage container 800) and a front cover (here in form of the storage container 900). The rear cover may be in the form of a box including a bottom portion and side wall portions extending upward from edges of the bottom portion. The curved flexible circuit film 710 may be located between the side wall portions 250a of the mold frame 200 and the side wall portions of the rear cover. In such an embodiment, the printed circuit board 730 may be located between the bottom of the bottom chassis 400 and the bottom of the rear cover. The front cover has a substantially rectangular band shape on a plane and may cover the edge portion of the display device 1000. At least a part of the front cover may overlap the non-display region of the display panel 100. In an alternative embodiment, the front cover may be omitted. The front cover and the rear cover are coupled to each other, and the rear cover and the mold frame 200 may be coupled to each other.

Hereinafter, a display device according to alternative embodiments of the invention will be described. However, descriptions of the same configurations as those of the display device 1000 and the mold frame 200 described together with FIG. 1 or the like will not be provided, and this will be clearly understood from the attached drawings.

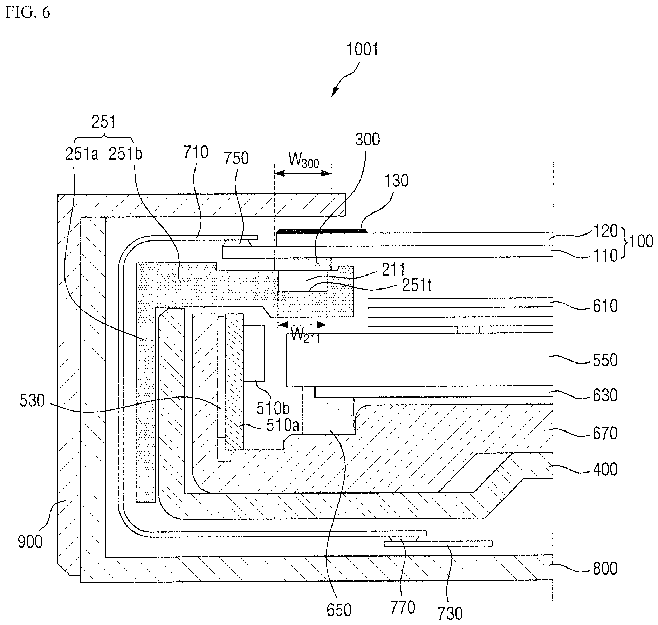

FIG. 6 is a cross-sectional view of a display device according to an alternative embodiment of the invention, and specifically, FIG. 6 is a cross-sectional view corresponding to FIG. 4.

Referring to FIG. 6, in an alternative embodiment, the display device 1001 and the mold frame may be substantially the same as the display device 1000 and the mold frame 200 of embodiments described above with reference to FIGS. 1 to 5 except that a width W₃₀₀ of the joining member 300 is larger than a width W₂₁₁ of the first light-transmit member 211. The widths again refer to widths in a direction across the upper surface of the first light-transmit member 211 along the second direction Y, i.e. along the comparatively shorter upper surface of the first light-transmit member 211.

In such an embodiment, the joining member 300 may abut directly on both the first light-transmit member 211 and the frame body 251 of the mold frame. In such an embodiment, where the width W₃₀₀ of the joining member 300 is larger than the width W₂₁₁ of the first light-transmit member 211, the central portion of the joining member 300 may be exposed to more light in a method of assembling a display device to be described later, as compared to the opposite edges of the member 300, such that the edge portions may be less cured than the central portion. Therefore, the joining member 300 may have a predetermined flexibility, and the durability of the display device 1001 may be substantially improved. In such an embodiment, the first light-transmit member 211, the joining member 300 and the light-shielding pattern 130 may at least partially overlap one another.

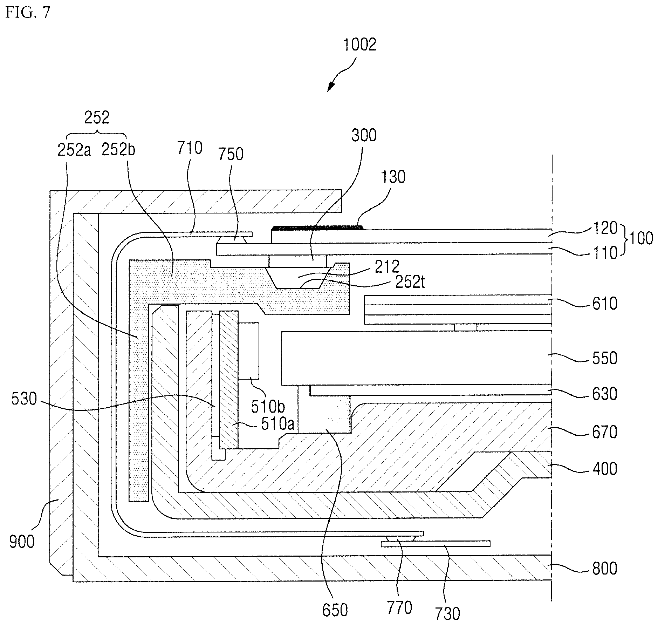

FIG. 7 is a cross-sectional view of a display device according to another alternative embodiment of the invention, and specifically, FIG. 7 is a cross-sectional view corresponding to FIG. 4.

Referring to FIG. 7, in an alternative embodiment, a display device 1002 and a mold frame are substantially the same as the display device 1000 and the mold frame 200 of the embodiments described above with reference to FIGS. 1 to 5 except that the inner walls of the recessed portion 252t of the mold frame have a slope.

In such an embodiment, at least a part of the side surfaces and the lower surface of the first light-transmit member 212 may abut directly on the frame body 252. The cross-sectional shape of the first light-transmit member 212 may be a shape corresponding to the recessed portion 252t. In such an embodiment, the side surfaces of the first light-transmit member 212 may have a partial slope. In one embodiment, for example, the width of the upper end portion of the first light-transmit member 212 may be larger than the width of the lower end portion of the first light-transmit member 212. The widths refer to widths in a direction across the upper surface of the first light-transmit member 212 along the second direction Y, i.e. along the comparatively shorter upper surface of the first light-transmit member 212. FIG. 7 illustrates an embodiment where the cross-sectional shape of the first light-transmit member 212 perpendicularly cut in the extending direction is approximately trapezoidal, but alternatively, the cross-sectional shape of the first light-transmit member 212 may be a polygon such as a triangle and a parallelogram, or the inclined side surfaces of the first light-transmit member 212 may include a curved surface.

In such an embodiment, the side surfaces of the first light-transmit member 212, that is, the inner walls of the recessed portion 252t of the mold frame have a slope, such that light proceeding through the first light-transmit member 212 to the upper side, that is, to the side of the joining member 300, may be effectively reflected and/or totally reflected.

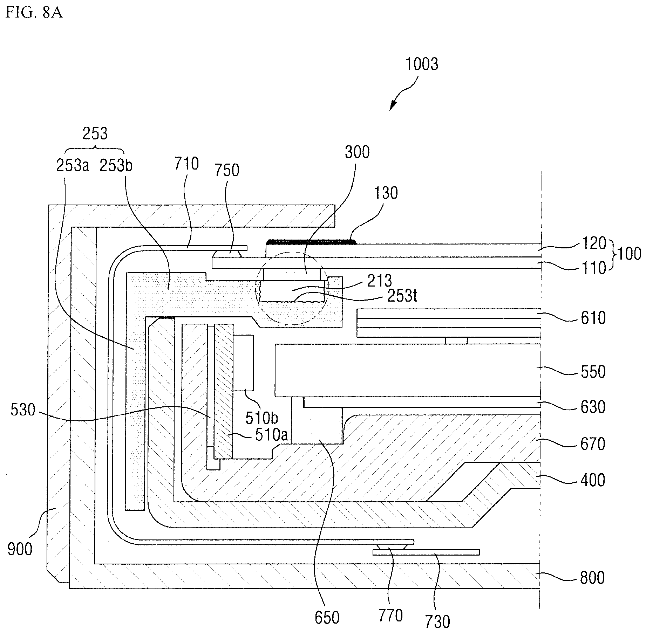

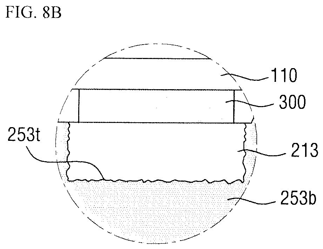

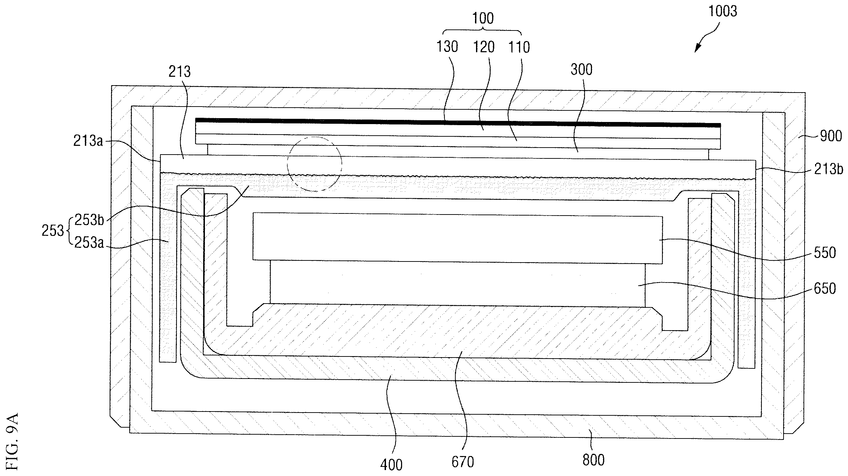

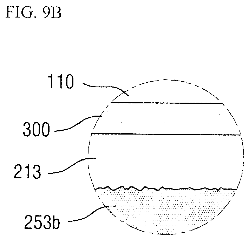

FIGS. 8A, 8B, 9A and 9B are cross-sectional views of a display device according to another embodiment of the invention, specifically, FIG. 8A is a cross-sectional view corresponding to FIG. 4, FIG. 8B is an enlarged view of the encircled portion in FIG. 8A, FIG. 9A is a cross-sectional view corresponding to FIG. 5, and FIG. 9B is an enlarged view of the encircled portion in FIG. 9A.

Referring to FIGS. 8A to 9B, in such an embodiment, a display device 1003 and a mold frame are substantially the same as the display device 1000 and the mold frame 200 of the exemplary embodiments described above with reference to FIGS. 1 to 5 except that at least a part of the side surfaces and the lower surface of the first light-transmit member 213 have a predetermined roughness.

At least a part of the side surfaces and the lower surface of the first light-transmit member 213 may abut directly on the frame body 253. The cross-sectional shape of the first light-transmit member 213 may have a shape corresponding to the recessed portion 253t. In such an embodiment, the inner walls and the base surface of the recessed portion 253t may have a predetermined roughness. In such an embodiment, the inner walls and the bottom surface of the recessed portion 253t may have irregular uneven surfaces.

In an exemplary embodiment, the roughness of at least a part of the side surfaces and the lower surface of the first light-transmit member 213 abutting directly on the frame body 253 may be greater than the roughness of the upper surface of the first light-transmit member 213 which is exposed without being covered with the frame body 253. In such an embodiment, the roughness of the interface between the frame body 253 and the first light-transmit member 213 may be greater than the roughness of the upper surface of the first light-transmit member 213. Accordingly, in an embodiment of the method of assembling the display device to be described later, the light proceeding via the first light-transmit member 213 may be scattered upward and may be reflected and/or totally reflected. In one embodiment, for example, where the first light-transmit member 213 and the frame body 253 of the mold frame are integrally formed using a method such as double injection, the first light-transmit member 213 and the frame body 253 of the mold frame are easily manufactured, and the joining force between the first light-transmit member 213 and the frame body 253 is effectively improved.

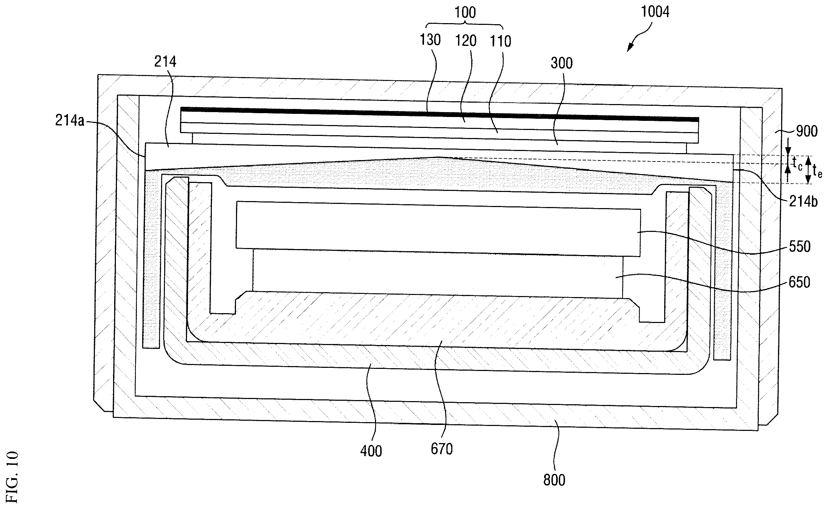

FIG. 10 is a cross-sectional view of a display device according to still another alternative embodiment of the invention, and specifically, FIG. 10 is a cross-sectional view corresponding to FIG. 5.

Referring to FIG. 10, in another alternative embodiment, a display device 1004 and a mold frame are substantially the same as the display device 1000 and the mold frame 200 of the embodiments described above with reference to FIGS. 1 to 5 except that the lower surface of the first light-transmit member 214 has a slope.

In such an embodiment, where the recessed portion is formed on the upper surface of the protruding portion of the mold frame, the upper surface of the first light-transmit member 214 may be exposed without being covered with the frame body. At least a part of the side surfaces of the first light-transmit member 214 may be exposed without being covered with the frame body. In one embodiment, for example, a side surface 214a located at one end (a left end portion in FIG. 10) of the first light-transmit member 214 in the first direction X may be exposed without being covered with the frame body. In an embodiment, a side surface 214b located at the other end (a right end portion in FIG. 10) of the first light-transmit member 214 in the first direction X may be exposed without being covered with the frame body. In such an embodiment, the thickness of the one end of the first light-transmit member 214 in the first direction X may be substantially equal to the thickness tₑ of the other end of the first light-transmit member 214 in the first direction X.

In an exemplary embodiment, the thickness t_{c} of the central portion of the first light-transmit member 214 extending in the first direction X may be smaller than the thickness of one end and the thickness tₑ of the other end of the first light-transmit member 214 in the first direction X.

In one embodiment, for example, the thickness of the first light-transmit member 214 may gradually decrease from the one end of the first light-transmit member 214 in the first direction X toward the central portion of the first light-transmit member 214. In such an embodiment, the thickness of the first light-transmit member 214 may gradually decrease from the other end of the first light-transmit member 214 in the first direction X toward the central portion of the first light-transmit member 214. FIG. 10 illustrates an embodiment where the thickness t_{c} of the central portion of the first light-transmit member 214 is larger than zero (0) and has a predetermined thickness, but in another alternative embodiment, the thickness t_{c} of the first light-transmit member 214 is about zero (0), and the first light-transmit member 214 on one side and the first light-transmit member 214 on the other side may be intermittently separated from each other on the basis of the central portion.

In an embodiment of the method of assembling a display device to be described later, by providing a configuration in which the thickness of the first light-transmit member 214 becomes gradually thinner toward the direction (i.e., the direction of the central portion) away from each of the one end side surface 214a and the other end side surface 214b in the first direction X of the first light-transmit member 214 for forming the light incident portion of light which is incident for curing the joining member 300, the incident light may be easily reflected and/or totally reflected at the interface between the first light-transmit member 214 and the frame body, and the joining member 300 may be uniformly cured despite a difference in distance from the light incident portion.

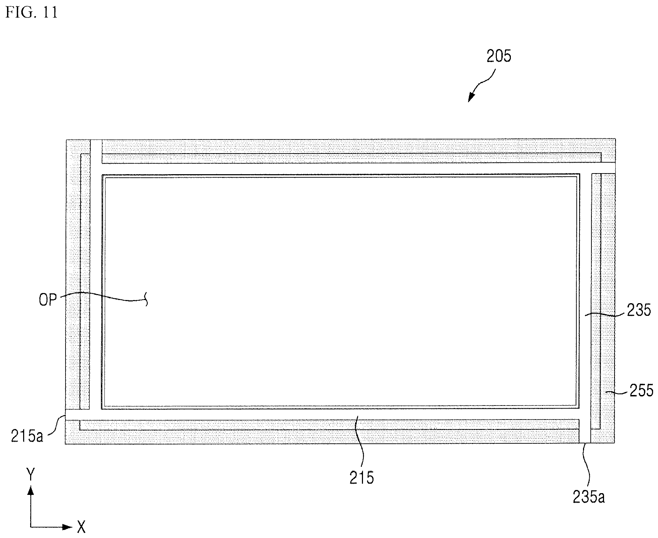

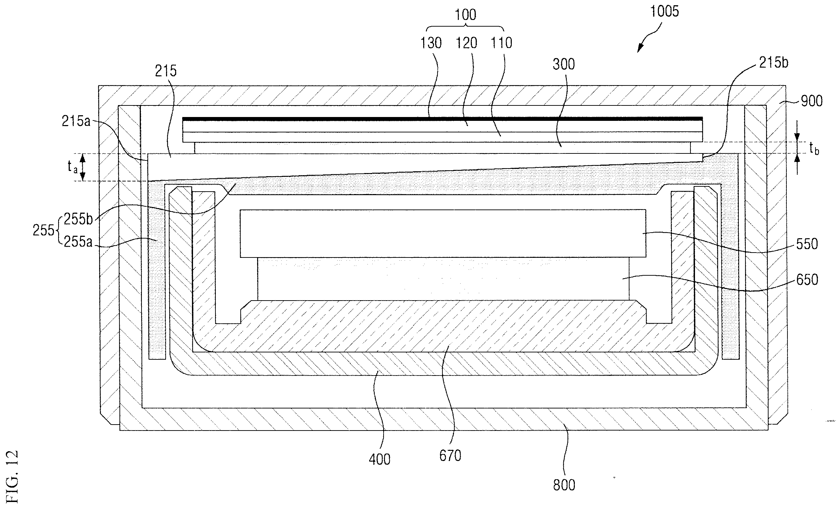

FIGS. 11 and 12 are drawings of the display device according to still another alternative embodiment of the invention. Specifically, FIG. 11 is a plan view corresponding to FIG. 3, and FIG. 12 is a plan view corresponding to FIG. 5.

Referring to FIGS. 11 and 12, a display device 1005 and a mold frame 205 are substantially the same as the display device 1004 and the mold frame of the embodiments described above with reference to FIGS. 1 to 5 except that a thickness tₐ of one end (a left end portion in FIG. 12) of the first light-transmit member 215 in the first direction X is larger than a thickness t_{b} of the other end (a right end portion in FIG. 12) of the first light-transmit member in the first direction X, and the other end of the first light-transmit member 215 is covered without being exposed by the frame body 255.

In such an embodiment, the first light-transmit member 215 extends in the first direction X and may have a substantially bar shape. The first light-transmit member 215 is disposed by being at least partially inserted into the recessed portion of the frame body 255. When the recessed portion is defined on the upper surface of the protruding portion 255b of the recessed frame body 255, the upper surface of the first light-transmit member 215 may be exposed without being covered with the frame body 255.

In an exemplary embodiment, at least a part of the side surfaces of the first light-transmit member 215 may be exposed without being covered with the frame body 255. In one embodiment, for example, the side surface 215a located at one end (the left side end portion in FIG. 12) of the first light-transmit member 215 in the first direction X may be exposed, without being covered with the frame body 255. In such an embodiment, the side surface 215b (the right side end portion in FIG. 12) located at the other end of the first light-transmit member 215 in the first direction X may not be exposed by being covered with the frame body 255. The length of the first light-transmit member 215 in the first direction X may be shorter than the length of the frame body 255 in the first direction X. The one end side surface 215a of the first light-transmit member 215 exposed without being covered with the frame body 255 may provide or form the light incident portion for curing the joining member 300 in the method of assembling the display device to be described later.

In an exemplary embodiment, the thickness tₐ of the one end of the first light-transmit member 215 extending in the first direction X may be larger than the thickness t_{b} of the other end of the first light-transmit member 215. In one embodiment, for example, the thickness of the first light-transmit member 215 may gradually decrease from one end of the first light-transmit member 215 in the first direction X toward the other end of the first light-transmit member 215 in the first direction X. FIG. 12 illustrates an embodiment where the thickness t_{b} of the other end of the first light-transmit member 215 has a predetermined thickness larger than 0, but in another alternative embodiment, the thickness t_{b} of the other end of the light member 215 may be zero (0) and the other end of the first light-transmit member 215 may not have a side surface.

In an embodiment of the method of assembling a display device to be described later, by providing a configuration in which the thickness of the first light-transmit member 215 becomes thinner in a direction away from the side surface 215a of one end in the first direction X of the first light-transmit member 215 which forms the light incident portion of light which is incident for curing the joining member 300, the incident light may be easily reflected and/or totally reflected at the interface between the first light-transmit member 215 and the frame body 255, and the joining member 300 may be uniformly cured despite the difference in distance from the light incident portion.

In some embodiments, the second light-transmit member 235 extends in the second direction Y and has an approximately bar shape, and the lower surface of the second light-transmit member 235 may have a slope. The second light-transmit member 235 may be at least partly inserted into the recessed portion of the frame body 255. The second light-transmit member 235 includes or is made of the same material as the first light-transmit member 215, and may be connected to the first light-transmit member 215. The upper surface of the first light-transmit member 215 and the upper surface of the second light-transmit member 235 may be located at the same level or on a same plane.

At least a part of the side surfaces of the second light-transmit member 235 may be exposed without being covered with the frame body 255. In one embodiment, for example, the side surface 235a located at one end (the lower end portion in FIG. 11) of the second light-transmit member 235 in the second direction Y may be exposed without being covered with the frame body 255. In such an embodiment, the side surface located at the other end (the upper end portion in FIG. 11) of the second light-transmit member 235 in the second direction Y may not be exposed by being covered with the frame body 255. The length of the second light-transmit member 235 in the second direction Y may be shorter than the width of the frame body 255 in the second direction Y. The one end side surface 235a of the second light-transmit member 235 exposed without being covered with the frame body 255 may form a light incident portion for curing the joining member 300 in a method for assembling a display device to be described later. In such an embodiment, the thickness of the second light-transmit member 235 may gradually decrease Y from the one end of the second light-transmit member 235 in the second direction Y toward the other end of the second light-transmit member 235 in the second direction Y.

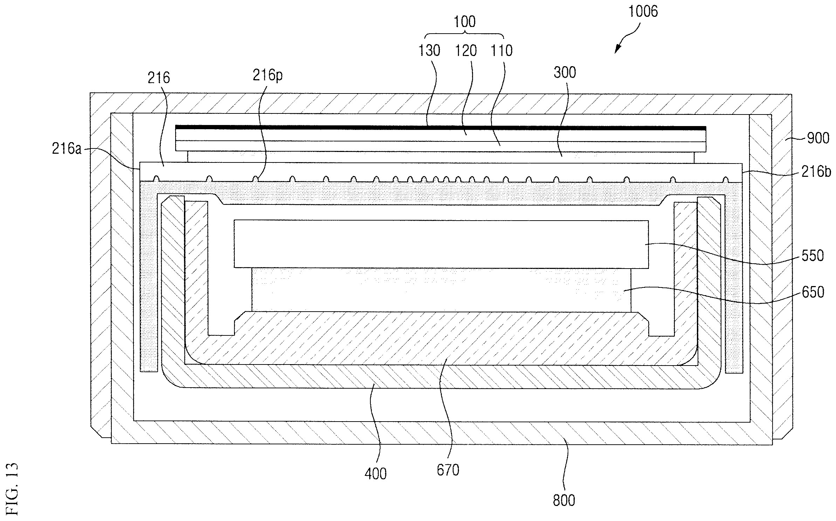

FIG. 13 is a cross-sectional view of a display device according to another alternative embodiment of the invention, and specifically, FIG. 13 is a cross-sectional view corresponding to FIG. 5.

Referring to FIG. 13, in such an embodiment, a display device 1006 and a mold frame are substantially the same as the display device 1000 and the mold frame 200 of the embodiments described above with reference to FIGS. 1 to 5 except that one or more light-emitting patterns 216p are defined or formed on the lower surface of the first light-transmit member 216.

In such an embodiment, at least a part of the side surfaces and the lower surface of the first light-transmit member 216 may abut directly on the frame body. The first light-transmit member 216 may have a shape corresponding to the recessed portion. The light-emitting patterns 216p may be spaced apart from each other along the first direction X and may be intermittently arranged. The width and/or the height of the plurality of light-emitting patterns 216p may be approximately uniform. The light-emitting patterns 216p may easily emit the light proceeding via the first light-transmit member 216 while repeating reflection and/or total reflection toward the upper side, that is, in a direction toward the joining member, in an embodiment of the method of assembling the display device to be described later.

FIG. 13 illustrates an embodiment where the light-emitting patterns 216p have a shape recessed from the lower surface of the first light-transmit member 216 to the inner side of the first light-transmit member 216, and the frame body fills the recessed portion. However, in another alternative embodiment, the light-emitting patterns 216p may have a shape protruding from the lower surface of the first light-transmit member 216 toward the frame body side. In such an embodiment, the light-emitting patterns 216p may be recessed patterns or protruding patterns.

In an embodiment, at least a part of the side surfaces of the first light-transmit member 216 may be exposed without being covered with the frame body. In one embodiment, for example, the side surface 216a located at one end (the left end portion in FIG. 13) of the first light-transmit member 216 in the first direction X may be exposed without being covered with the frame body. In such an embodiment, the side surface 216b (the right side end portion in FIG. 13) located at the other end of the first light-transmit member 216 in the first direction X may be exposed without being covered with the frame body.

In an exemplary embodiment, the arrangement density of the light-emitting patterns 216p at the central portion of the first light-transmit member 216 extending in the first direction X may be larger than the arrangement density of the light-emitting patterns 216p at one end and the other end of the first light-transmit member 216 in the first direction X. Herein, the arrangement density means an area occupied by the light-emitting pattern 216p per unit area.

In one embodiment, for example, a distance between two adjacent light-emitting patterns 216p in the first direction X becomes gradually shorter from the one end of the first light-transmit member 216 in the first direction X toward the central portion of the first light-transmit member 216. In such an embodiment, the distance between the two adjacent light-emitting patterns 216p in the first direction X may become gradually shorter from the other end of the first light-transmit member 216 in the first direction X toward the central portion of the first light-transmit member 216.

In an embodiment of the method for assembling a display device to be described later, by providing a configuration in which the arrangement density of the light-emitting patterns 216p gradually increases in a direction away from the one end side surface 216a and the other end side surface 216b in the first direction X of the first light-transmit member 216 which forms a light incident portion of light which is incident for curing the joining member 300, the incident light may be effectively emitted in a direction to the joining member 300, and the joining member 300 may be uniformly cured despite a difference in distance from the light incident portion.

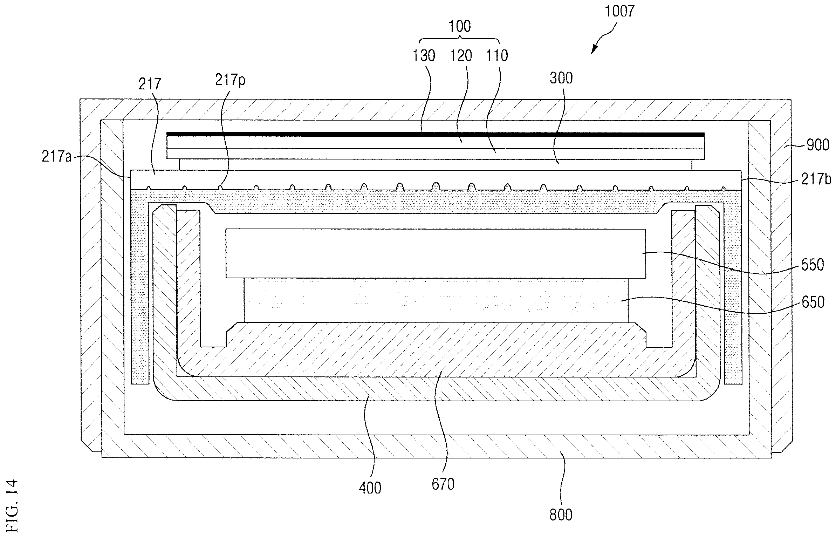

FIG. 14 is a cross-sectional view of a display device according to still another embodiment of the invention, and specifically, FIG. 14 is a cross-sectional view corresponding to FIG. 5.

Referring to FIG. 14, in such an embodiment, a display device 1007 and a mold frame are substantially the same as the display device 1006 and the mold frame of the embodiments described above with reference to FIG. 13 except that the distance between the two adjacent light-emitting patterns 217p in the first direction X is approximately uniform, and the width of the plurality of light-emitting patterns 217p gradually increases toward the central portion of the first light-transmit member 217.

In an embodiment of the assembly method of the display device to be described later, by providing a configuration in which the arrangement density of the light-emitting patterns 217p gradually increases in a direction away from the side surface 217a of one end (the left end portion in FIG. 14) and the side surface 217b of the other end (the right end portion in FIG. 14) in the first direction X of the first light-transmit member 217 which forms the light incident portion of the light which is incident for curing the joining member 300, the incident light may be effectively emitted in a direction to the joining member 300, the joining member 300 may be uniformly cured despite the difference in distance from the light incident portion.

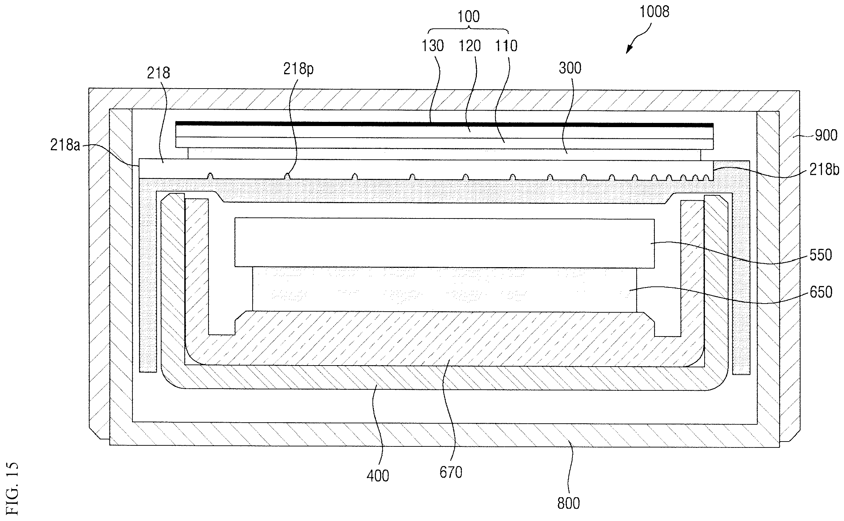

FIG. 15 is a cross-sectional view of a display device according to still another alternative embodiment of the invention, and specifically, FIG. 15 is a cross-sectional view corresponding to FIG. 5.

Referring to FIG. 15, in such an embodiment, a display device 1008 and a mold frame are substantially the same as the display device 1006 and the mold frame of the embodiments described above with reference to FIG. 13 except that the arrangement density of the light emission patterns 218p increases toward the other end (the right end portion in FIG. 15) of the first light-transmit member 218 in the first direction X from one end (the left side end portion in FIG. 15) of the first light-transmit member 218 in the first direction X, and the other end of the first light-transmit member 218 is covered without being exposed by the frame body.

In such an embodiment, at least a part of the side surfaces of the first light-transmit member 218 may be exposed without being covered with the frame body. In one embodiment, for example, the side surface 218a located at one end (the left side end portion in FIG. 15) of the first light-transmit member 218 in the first direction X may be exposed without being covered with the frame body. In such an embodiment, the side surface 218b located at the other end (the right end portion in FIG. 15) of the first light-transmit member 218 in the first direction X may not be exposed by being covered with the frame body. The one end side surface 218a of the first light-transmit member 218 which is exposed without being covered with the frame body may form a light incident portion for curing the joining member 300 in an embodiment of a method of assembling a display device.

In an exemplary embodiment, the arrangement density of the light-emitting patterns 218p near the one end in the first direction X of the first light-transmit member 218 extending in the first direction X may be smaller than the arrangement density of the light-emitting patterns 218p near the other end in the first direction X of the light member 218. FIG. 15 illustrates an embodiment where the separation distance between the adjacent light-emitting patterns 218p in the first direction X gradually decreases from the one end of the first light-transmit member 218 in the first direction X toward the other end of the first light-transmit member 218 in the first direction X. However, in another alternative embodiment, the size (width and/or height) of the light-emitting patterns 218p may gradually increase from the one end toward the other end.

In an embodiment of the method of assembling the display device to be described later, by providing a configuration in which the arrangement density of the light-emitting patterns 218p gradually increases in a direction away from the side surface 218a of one end (the left side end portion in FIG. 15) in the first direction X of the first light-transmit member 218 which forms the light incident portion of the light which is incident for curing the joining member 300, the incident light may be effectively emitted in a direction to the joining member, and it the joining member 300 may be uniformed cured despite the difference in distance from the light incident portion.

Although it is not illustrated in the drawings, in another alternative embodiment, the arrangement density of the light-emitting patterns may be irregular. In such an embodiment, the arrangement density of the light-emitting patterns may not be regular from one end toward the other end of the first light-transmit member in the first direction X. In one embodiment, for example, a large part and a small part of the arrangement density of the light-emitting patterns are repeated from one end toward the other end of the first light-transmit member in the first direction X, but the arrangement of the light-emitting patterns and/or the arrangement density of the light-emitting patterns may be irregular.

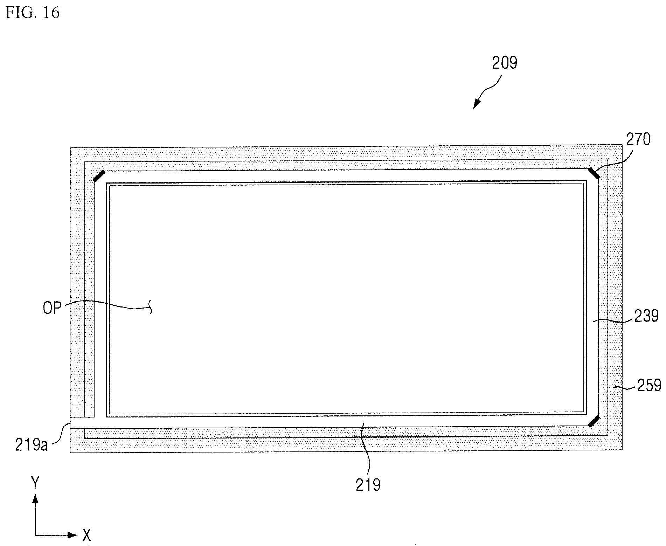

FIG. 16 is a plan view of a mold frame according to another alternative embodiment of the invention, and specifically, FIG. 16 is a plan view corresponding to FIG. 3.

Referring to FIG. 16, in such an embodiment, a display device and a mold frame 209 are substantially the same as the display device 1000 and the mold frame 200 of the embodiments described above with reference to FIGS. 1 to 5 except for a first light-transmit member 219, a second light-transmit member 239, and a reflecting member 270 that reflects the light proceeding in the first direction X inside the first light-transmit member 270 to be incident on the side of the second light-transmit member 239.

The first light-transmit member 219 extends in the first direction X and may have a bar shape. When a recessed portion is formed on the upper surface of the frame body 259, the upper surface of the first light-transmit member 219 may be exposed without being covered with the frame body 259. At least a part of the side surfaces of the first light-transmit member 219 may be exposed without being covered with the frame body 259. In one embodiment, for example, the side surface 219a located at one end (the left end portion in FIG. 16) of the first light-transmit member 219 in the first direction X may be exposed, without being covered with the frame body 259. IN such an embodiment, the side surface positioned at the other end (the right end portion in FIG. 16) of the first light-transmit member 219 in the first direction X may not be exposed by being covered with the frame body 259.

In such an embodiment, the second light-transmit member 239 may extend in the substantially second direction Y and may have a bar shape. The upper surface of the second light-transmit member 239 may be exposed without being covered with the frame body 259. In an exemplary embodiment, all the side surfaces of the second light-transmit member 239 may be covered with the frame bodies 259 and may not be exposed. In such an embodiment, the entire second light-transmit member 239 may not be exposed by being covered with the frame body 259 except the upper surface.

In an exemplary embodiment, the mold frame 209 may further include a reflecting member 270 configured to reflect the light proceeding in the first direction X in the first light-transmit member 219 to be incident on the second light-transmit member 239 side. The reflecting member 270 is located in a vicinity of the connecting portion between the first light-transmit member 219 and the second light-transmit member 239, and may be disposed by being inserted in the recessed portion of the frame body 259. One surface of the reflecting member 270 may be disposed in a direction of simultaneously intersecting with the first direction X and the second direction Y. The material of the reflecting member 270 is not particularly limited as long as the reflecting member 270 has high light reflectance. In one embodiment, for example, the reflecting member 270 may include or be formed of a metallic material.

FIG. 16 illustrates an embodiment where a single light incident portion (i.e., a side surface 219a of the first light-transmit member 219) is formed near the vertex on the plane of the mold frame 209 and three reflecting members 270 are disposed near the vertex on the plane of the mold frame 209. However, in another alternative embodiment, there are two or more light incident portions, or the light incident portions may be located near the corners of the mold frame 209 in the first direction X and/or the second direction Y on the plane.

Hereinafter, a method for assembling the display device according to an embodiment of the invention will be described. However, descriptions of the same or like configurations as those of the display device 1000 and the mold frame 200 described above will hereinafter be omitted, and this will be clearly understood from the attached drawings.

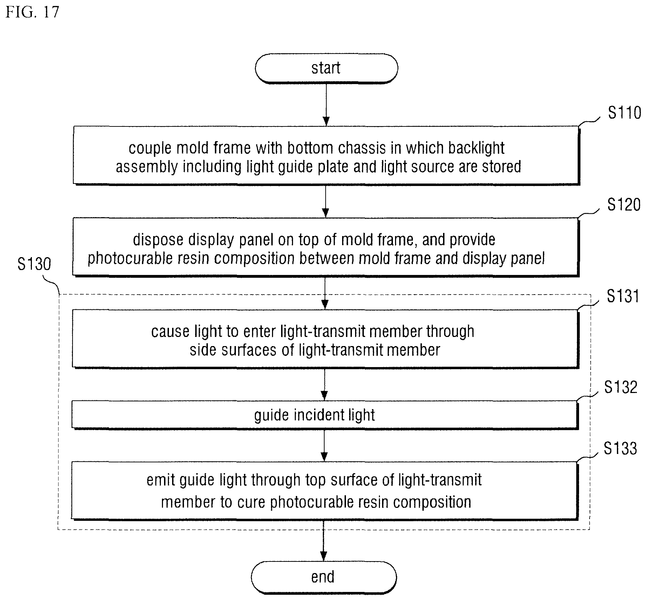

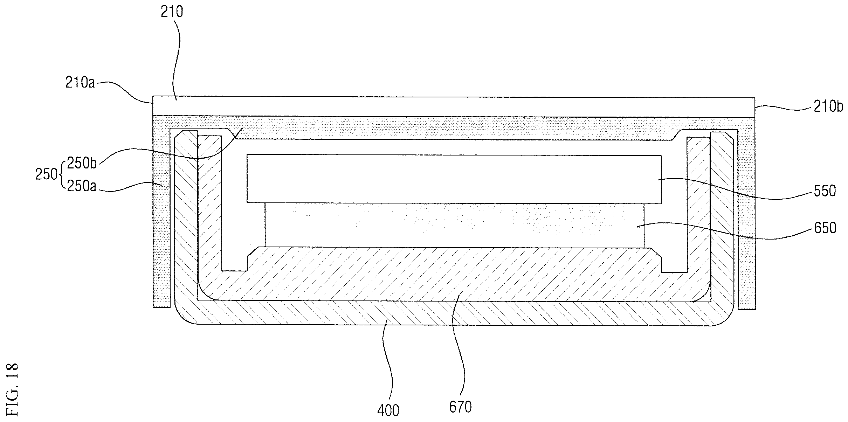

FIG. 17 is a flowchart illustrating a method of assembling the display device according to an embodiment of the invention. FIGS. 18 to 20 are cross-sectional views illustrating the method of assembling the display device of FIG. 17.

First, referring to FIGS. 17 and 18, the bottom chassis 400 and the mold frames 210 and 250 are coupled to each other (S110). In an exemplary embodiment, a backlight assembly including a light source unit (not illustrated) and a light guide plate 550, a reinforcing member 670, and the like may be stored inside the bottom chassis 400. The method of coupling the bottom chassis 400 and the mold frames 210 and 250 is not particularly limited. In one embodiment, for example, the side wall portions of the bottom chassis 400 and the side wall portions 250a of the mold frame may be couple through screws or hooks, or may be coupled using a double-sided tape, an adhesive or the like.

The mold frame includes a frame body 250 which includes the rectangular band-shaped side wall portions 250a on the plane and the protruding portion 250b extending from the inner walls of the side wall portions 250a, and the light-transmit member 210 disposed on the frame body 250. The light-transmit member 210 extends along the approximately first direction X and has a bar shape. At least a part of the side surfaces and the upper surface of the light-transmit member 210 may be exposed without being covered with the frame body 250. The method of manufacturing the mold frames 210 and 250 is not particularly limited. In one embodiment, for example, a mold frame, in which the frame body 250 and the light-transmit member 210 are coupled to each other, may be manufactured via a double injection.

The shape, the arrangement, the material and the like of the backlight assembly including the light guide plate 550, the mold frame including the frame body 250 and the light-transmit member 210 and the like have been described above in detail, and any repetitive detailed description thereof will be omitted.

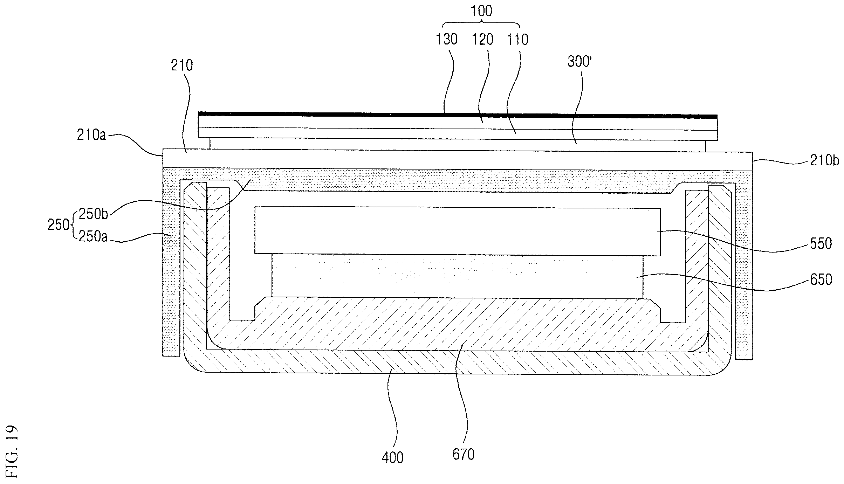

Next, referring to FIGS. 17 and 19, the display panel 100 is placed on the top of the mold frames 210 and 250 to which the bottom chassis 400 is coupled, and a photocurable resin composition 300' is provided between the mold frames 210 and 250 and the display panel 100 (S120). The display panel 100 may be a liquid crystal display panel, an electrophoretic display panel, an organic light emitting display panel, a plasma display panel or the like. In one embodiment, for example, the curable resin composition 300' may include materials which are cured by light of the ultraviolet ray wavelength band. In some embodiments, the curable resin composition 300' may include a photocurable resin composition and a thermosetting resin composition.

The method of providing the curable resin composition 300' between the mold frames 210 and 250 and the display panel 100 is not particularly limited. In one embodiment, for example, the display panel 100 may be disposed after the curable resin composition 300' is applied onto the light-transmit member 210 s to at least partially overlap the light-transmit member 210 of the mold frame, or the mold frames 210 and 250 may be disposed in a way such that the light-transmit member 210 of the mold frame and the curable resin composition 300' at least partially overlap each other after applying the curable resin composition 300' onto the lower surface of the display panel 100.

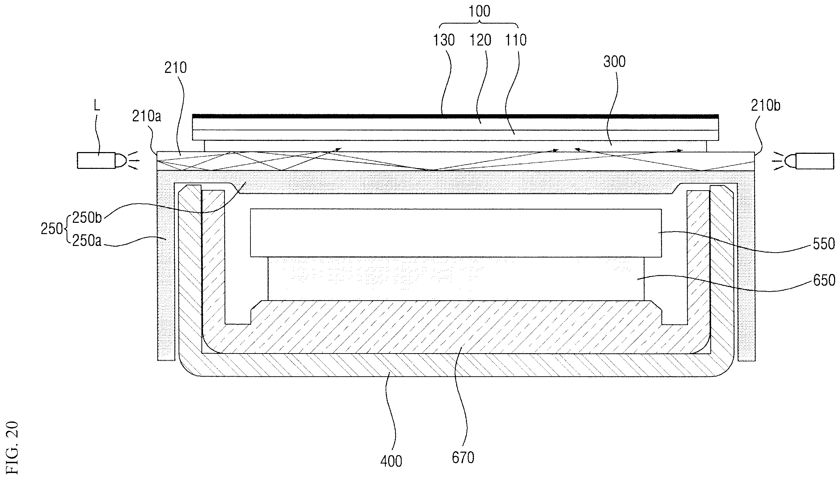

Next, referring to FIGS. 17 and 20, light is guided through the light-transmit member 210 to cure the curable resin composition 300' (S130). The process (S130) of curing the curable resin composition 300' is a process for coupling the mold frames 210 and 250 and the display panel 100. In an exemplary embodiment, the process (S130) of curing the curable resin composition 300' by guiding the light through the light-transmit member 210 may include a process of causing light to enter the interior of the light-transmit member 210, or emitting light into the light-transmit member 210, via the exposed side surfaces of the light-transmit member 210 (S131), a process of guiding at least a part of the incident light, which is the light entered into the light-transmit member 210, along the extending direction of the light-transmit member 210 (S132), and a process of forming a joining member 300 by emitting at least a part of the light guided through the exposed upper surface of the light-transmit member 210 to cure the curable resin composition 300' (S133).

The side surface 210a located at one end (the left end portion in FIG. 20) in the first direction X of the light-transmit member 210 exposed without being covered with the frame body 250, and the side surface 210b located at the other end (the right end portion in FIG. 20) in the first direction X may form the light incident portions. In an exemplary embodiment, the process (S131) of causing the light to enter the interior of the light-transmit member 210 via the exposed side surfaces of the light-transmit member 210 may be a process of irradiating the interior of the light-transmit member 210 with laser through the exposed side surfaces 210a and 210b of the light-transmit member 210. In one embodiment, for example, the laser L may be laser having a wavelength band of ultraviolet rays.

The light incident into the light-transmit member 210 may proceed by being guided along the light-transmit member 210 extending in the first direction X. The invention is not limited thereto. In one embodiment, for example, at least some of the incident light is repeatedly reflected and/or totally reflected through the interface between the light-transmit member 210 and the frame body 250 and the interface between the light-transmit member 210 and the curable composition 300', and may proceed approximately in the first direction X. In an exemplary embodiment, the refractive index of the light-transmit member 210 may be greater than the refractive index of the curable resin composition 300'.

At least some of the light incident on the interior of the light-transmit member 210 and the light guided by the light-transmit member 210 may be emitted to the upper surface of the light-transmit member 210, that is, in a direction to the curable resin composition 300'. The light emitted through the upper surface of the light-transmit member 210 contributes to the curing of the curable resin composition 300', thereby forming the joining member 300 cured by light.

In an embodiment, although it is not illustrated in the drawings, the method may further include a process of coupling the rear cover and the front cover prior to the process (S130) of curing the curing curable resin composition.

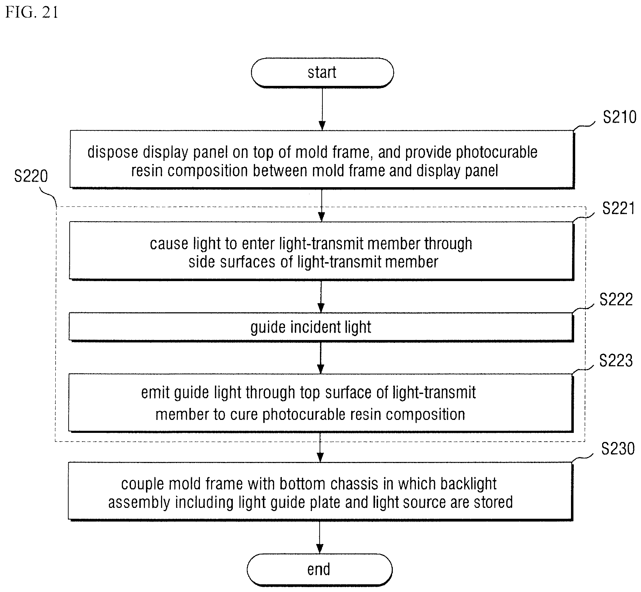

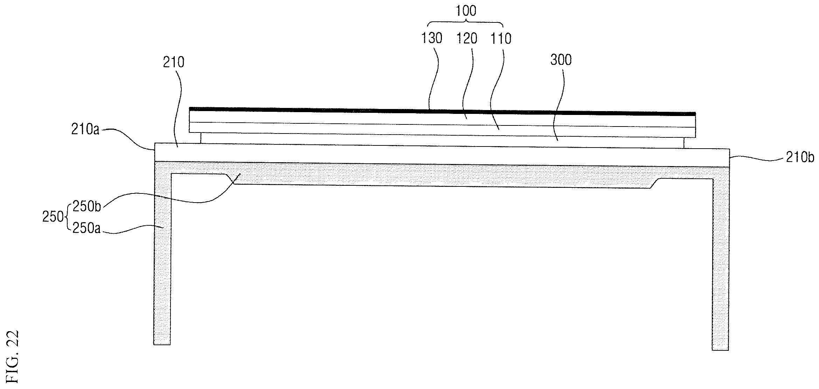

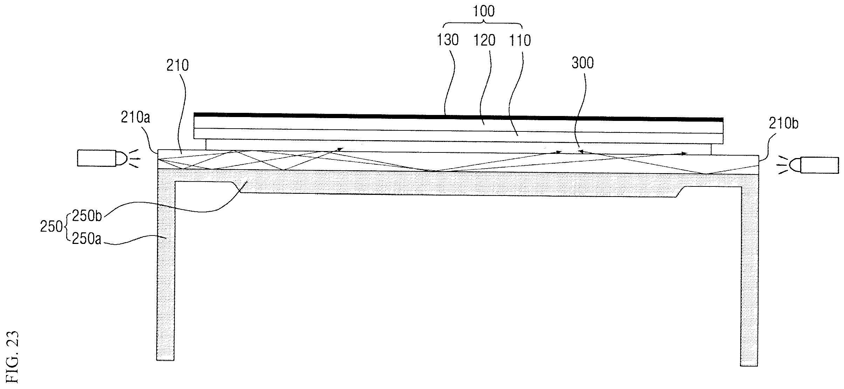

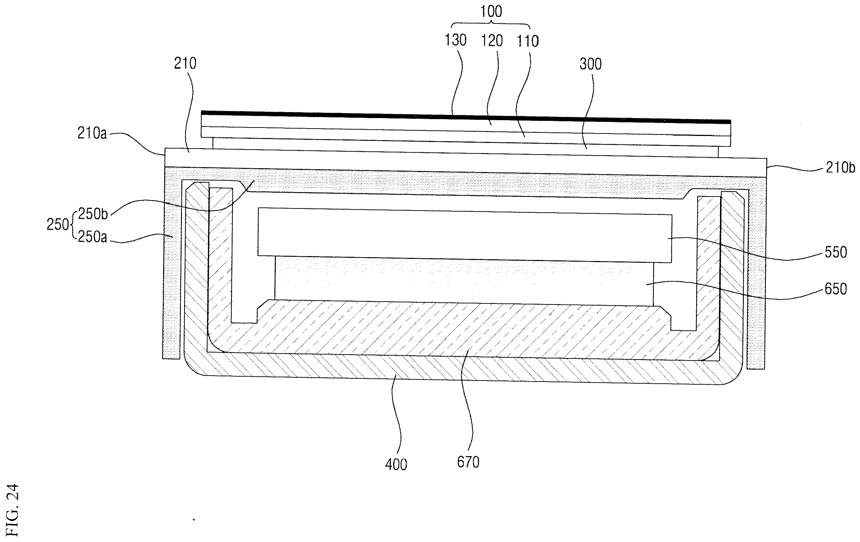

FIG. 21 is a flowchart illustrating a method of assembling a display device according to an alternative embodiment of the invention. FIGS. 22 to 24 are cross-sectional views illustrating the method of assembling the display device of FIG. 21. Referring to FIGS. 22 to 24, such an embodiment of the method of assembling the display device is substantially the same as the embodiments of the method of assembling the display device described above with reference to FIGS. 17 to 20 except that the mold frames 210 and 250 and the display panel are coupled to each other, prior to coupling the mold frames 210 and 250 with the bottom chassis 400 in which the backlight assembly is stored.

First, referring to FIGS. 21 and 22, the display panel 100 is disposed on the top of the mold frames 210 and 250, and the curable resin composition 300' is provided between the mold frames 210 and 250 and the display panel 100 (S210). The curable resin composition 300' may be provided to at least partially overlap the light-transmit member 210 on the light-transmit member 210 of the mold frame. Since the curable resin composition 300' has been described in detail with reference to FIG. 17 and the like, and any repetitive detailed description thereof will be omitted.

Subsequently, referring to FIGS. 21 to 23, the curable resin composition 300' is cured by guiding light through the light-transmit member 210 (S220). The process (S220) of curing the curable resin composition 300' may be a process of coupling the mold frames 210 and 250 and the display panel 100. In an exemplary embodiment, the process (S220) of curing the curable resin composition 300' by guiding the light through the light-transmit member 210 may include a process of causing the light to enter the light-transmit member 210 through the exposed side surfaces of the light-transmit member 210 (S221), a process of guiding at least some of the incident light along the extending direction of the light-transmit member 210 (S222), and a process of forming the joining member 300 by emitting at least some of the light guided through the exposed upper surface of the light-transmit member 210 to cure the curable resin composition 300'. In an exemplary embodiment, the refractive index of the light-transmit member 210 may be greater than the refractive index of the curable resin composition 300'. Such processes are substantially the same as those described above with reference to FIGS. 17 to 20, and any repetitive detailed description thereof will be omitted.

Subsequently, referring to FIGS. 21 to 24, the bottom chassis 400 and the mold frames 210 and 250 are coupled to each other (S230). In the exemplary embodiment, the backlight assembly including the light source unit (not illustrated) and the light guide plate 550, the reinforcing member 670, and the like may be stored in the bottom chassis 400. The method of coupling the bottom chassis 400 and the mold frames 210 and 250 is not particularly limited. In one embodiment, for example, the bottom chassis 400 and the mold frames 210 and 250 may be coupled using screw coupling, hook coupling, double-sided tape, adhesive or the like.

Although it is not illustrated in the drawings, the method may further include a process of coupling the rear cover and the front cover, after the process (S230) of coupling the bottom chassis 400 and the mold frames 210 and 250.

In embodiments of the mold frame, the display device including the mold frame, and the method of assembling the display device, as described herein, the photocurable resin composition is effectively used as a curable resin composition by including the light-transmit member that provides a route through which the light irradiated from the outside of the mold frame can proceed, thereby providing a sufficient coupling force between the display panel and the mold frame, even if the curing process is not performed at a high temperature for a long time.

While the invention has been particularly illustrated and described with reference to exemplary embodiments thereof, it will be understood by those of ordinary skill in the art that various changes in form and detail may be made therein without departing from the scope of the invention as defined by the following claims. The exemplary embodiments should be considered in a descriptive sense only and not for purposes of limitation.

## Claims

1. A display device (1000, 1001, 1002, 1003, 1004, 1005, 1006, 1007, 1008) comprising:
a display panel (100);
a mold frame (200, 205, 209) which supports the display panel (100), wherein the mold frame (200, 205, 209) comprises:
a frame body (250, 251, 252, 253, 255, 259) comprising a recessed portion (250t, 251t, 252t, 253t), the recessed portion being a trench having two facing inner walls and a base surface; and
a first light-transmit member (210, 211, 212, 213, 214, 215, 216, 217, 218, 219) extending in a first direction (X) and at least partially inserted into the recessed portion (250t, 251t, 252t, 253t); and
a joining member (300) which couples the display panel (100) and the mold frame (200, 205, 209) to each other,
wherein the first light-transmit member (210, 211, 212, 213, 214, 215, 216, 217, 218, 219) and the joining member (300) at least partially overlap each other,
wherein the joining member (300) is made of a photo-curable material, and
wherein the first light-transmit member (210, 211, 212, 213, 214, 215, 216, 217, 218, 219) is in optical contact with the joining member (300) and at least a portion of the first light-transmit member (210, 211, 212, 213, 214, 215, 216, 217, 218, 219) is exposed to the outside of the device after the mold frame (200, 205, 209) and the display panel (100) have been joined.

2. The display device (1000, 1001, 1002, 1003, 1004, 1005, 1006, 1007, 1008) of claim 1, wherein
the display panel (100) comprises a light-shielding pattern (130) disposed in an edge portion thereof, and
the first light-transmit member (210, 211, 212, 213, 214, 215, 216, 217, 218, 219), the joining member (300) and the light-shielding pattern (130) at least partially overlap one another.

3. The display device (1000, 1001, 1002, 1003, 1004, 1005, 1006, 1007, 1008) of claim 1 or 2, wherein
the first light-transmit member (210, 211, 212, 213, 214, 215, 216, 217, 218, 219) has a bar shape extending in the first direction (X),
the first light-transmit member (210, 211, 212, 213, 214, 215, 216, 217, 218, 219) abuts directly on the frame body (250, 251, 252, 253, 255, 259), and
an upper surface of the first light-transmit member (210, 211, 212, 213, 214, 215, 216, 217, 218, 219) is aligned with an upper surface of the frame body (250, 251, 252, 253, 255, 259) and on a same plane to define a flat surface.

4. The display device (1000, 1001, 1002, 1003, 1004, 1005, 1006, 1007, 1008) of at least one of claims 1 to 3, wherein the first light-transmit member (210, 211, 212, 213, 214, 215, 216, 217, 218, 219) and the frame body (250, 251, 252, 253, 255, 259) comprise different materials from each other.

5. The display device (1000, 1001, 1002, 1003, 1004, 1005, 1006, 1007, 1008) of claim 4, wherein
an optical density of the first light-transmit member (210, 211, 212, 213, 214, 215, 216, 217, 218, 219) is less than an optical density of the frame body (250, 251, 252, 253, 255, 259),
a refractive index of the first light-transmit member (210, 211, 212, 213, 214, 215, 216, 217, 218, 219) is greater than a refractive index of the frame body (250, 251, 252, 253, 255, 259),
the refractive index of the first light-transmit member (210, 211, 212, 213, 214, 215, 216, 217, 218, 219) is less than a refractive index of the joining member (300),
the frame body (250, 251, 252, 253, 255, 259) comprises plastic, non-metallic inorganic material or carbon fiber,
the first light-transmit member (210, 211, 212, 213, 214, 215, 216, 217, 218, 219) comprises polycarbonate, polystyrene, polymethyl methacrylate, polyethylene terephthalate, glass or quartz, and
the joining member (300) comprises a photocured resin, and
the first light-transmit member (210, 211, 212, 213, 214, 215, 216, 217, 218, 219) abuts directly on the joining member (300).

6. The display device (1000, 1001, 1002, 1003, 1004, 1005, 1006, 1007, 1008) of at least one of claims 1 to 5, wherein the frame body (250, 251, 252, 253, 255, 259) comprises:
side wall portions (250a, 251a, 252a, 253a, 255a), and
protruding portions (250b, 251b, 252b, 253b, 255b) extending from the side wall portions (250a, 251a, 252a, 253a, 255a) to support the display panel (100),
wherein the recessed portion (250t, 251t, 252t, 253t) extending in the first direction (X) is defined on an upper surface of the protruding portion (250b, 251b, 252b, 253b, 255b), and
the upper surface of the first light-transmit member (210, 211, 212, 213, 214, 215, 216, 217, 218, 219) is exposed without being covered with the frame body (250, 251, 252, 253, 255, 259).

7. The display device (1003) of at least one of claims 1 to 6, wherein
the first light-transmit member (213) abuts directly on the frame body (253), and
a roughness of a surface of the first light-transmit member (213), which contacts the frame body (253), is greater than a roughness of the upper surface of the first light-transmit member (213).

8. The display device (1002) of claim 6 or 7, wherein side surfaces of the first light-transmit member (212) are in contact with the frame body (252), and have a slope.

9. The display device (1006) of claim 6, wherein
one front end of the first light-transmit member (216) extending in the first direction (X) is at least partially exposed without being covered with the frame body,
the other front end of the first light-transmit member (216) extending in the first direction (X) is at least partially exposed without being covered with the frame body,
the first light-transmit member (216) comprises light-emitting patterns defined on a lower surface, and
an arrangement density of the light-emitting patterns at a central portion of the first light-transmit member (216) is greater than an arrangement density of the light-emitting patterns (216p) at an edge portion of the first light-transmit member (216).

10. The display device (1004) of claim 6 or 7, wherein
one front end of the first light-transmit member (214) extending in the first direction (X) is at least partially exposed without being covered with the frame body,
the other front end of the first light-transmit member (214) extending in the first direction (X) is at least partially exposed, without being covered with the frame body, and
thicknesses of the one front end and the other front end of the first light-transmit member (214) are larger than a thickness of a central portion of the first light-transmit member (214).

11. The display device (1008) of claim 6, wherein
one front end of the first light-transmit member (218) extending in the first direction (X) is at least partially exposed without being covered with the frame body,
the other front end of the first light-transmit member (218) extending in the first direction (X) is covered with the frame body,
the first light-transmit member (218) comprises light-emitting patterns (218p) defined on a lower surface,
an arrangement density of the light-emitting patterns (218p) in a vicinity of the other front end of the first light-transmit member (218) is greater than an arrangement density of the light-emitting patterns (218p) in a vicinity of the one front end of the first light-transmit member (218).

12. The display device (1005) of claim 6 or 7, wherein
one front end of the first light-transmit member (215) extending in the first direction (X) is at least partially exposed without being covered with the frame body (255),
the other front end of the first light-transmit member (215) extending in the first direction (X) is covered with the frame body (255), and
a thickness of the one front end of the first light-transmit member (215) is larger than a thickness of the other front end of the first light-transmit member (215).

13. The display device (1000, 1001, 1002, 1003, 1004, 1005, 1006, 1007, 1008) of claim 6, wherein
one front end of the first light-transmit member (210, 211, 212, 213, 214, 215, 216, 217, 218, 219) extending in the first direction (X) is at least partially exposed without being covered with the frame body (250, 251, 252, 253, 255, 259), and
an exposed side surface of the first light-transmit member (210, 211, 212, 213, 214, 215, 216, 217, 218, 219) at the one front end is aligned with an outer surface of the side wall portions (250a, 251a, 252a, 253a, 255a) of the frame body (250, 251, 252, 253, 255, 259) on a same plane to define a flat surface.

14. The display device of at least one of claims 1 to 13, wherein the mold frame (209) further comprises:
a second light-transmit member (239) at least partially inserted in the recessed portion, extends in a second direction (Y) intersecting with the first direction (X), and connected to the first light-transmit member (219); and
a reflecting member (270) which reflects light proceeding in the first direction (X) within the first light-transmit member (219) and allows the light to be incident on the second light-transmit member (239),
wherein the upper surface of the second light-transmit member (239) is exposed without being covered with the frame body (259).

15. A mold frame (200, 205, 209) comprising:
a frame body (250, 251, 252, 253, 255, 259) which comprises:
side wall portions (250a, 251a, 252a, 253a, 255a); and
protruding portions (250b, 251b, 252b, 253b, 255b) extending from inner walls of the side wall portions (250a, 251a, 252a, 253a, 255a) and comprising a recessed portion (250t, 251t, 252t, 253t), the recessed portion being a trench having two facing inner walls and a base surface; and
a light-transmit member (210, 211, 212, 213, 214, 215, 216, 217, 218, 219, 230, 235, 239) comprising a material different from a material of the frame body (250, 251, 252, 253, 255, 259) and at least partially inserted into the recessed portion (250t, 251t, 252t, 253t),
wherein at least a part of side surfaces and an upper surface of the light-transmit member (210, 211, 212, 213, 214, 215, 216, 217, 218, 219, 230, 235, 239) are exposed without being covered with the frame body (250, 251, 252, 253, 255, 259).

## Patentansprüche

1. Anzeigevorrichtung (1000, 1001, 1002, 1003, 1004, 1005, 1006, 1007, 1008), umfassend:
ein Anzeigefeld (100);
einen Formrahmen (200, 205, 209), der das Anzeigefeld (100) hält, wobei der Formrahmen (200, 205, 209) Folgendes umfasst:
einen Rahmenkörper (250, 251, 252, 253, 255, 259), umfassend einen vertieften Abschnitt (250t, 251t, 252t, 253t), wobei der vertiefte Abschnitt ein Einschnitt ist, der zwei gegenüberliegende Innenwände und eine Grundfläche aufweist; und
ein erstes Lichtübertragungselement (210, 211, 212, 213, 214, 215, 216, 217, 218, 219), das sich in einer ersten Richtung (X) erstreckt und wenigstens teilweise in den vertieften Abschnitt (250t, 251t, 252t, 253t) eingefügt ist; und
ein Verbindungselement (300), welches das Anzeigefeld (100) und den Formrahmen (200, 205, 209) aneinanderkoppelt,
wobei das erste Lichtübertragungselement (210, 211, 212, 213, 214, 215, 216, 217, 218, 219) und das Verbindungselement (300) einander wenigstens teilweise überlappen,
wobei das Verbindungselement (300) aus einem lichthärtbaren Material hergestellt ist, und
wobei das erste Lichtübertragungselement (210, 211, 212, 213, 214, 215, 216, 217, 218, 219) in optischem Kontakt mit dem Verbindungselement (300) ist und wenigstens ein Abschnitt des ersten Lichtübertragungselements (210, 211, 212, 213, 214, 215, 216, 217, 218, 219) zur Außenseite der Vorrichtung freiliegt, nachdem der Formrahmen (200, 205, 209) und das Anzeigefeld (100) miteinander verbunden wurden.

2. Anzeigevorrichtung (1000, 1001, 1002, 1003, 1004, 1005, 1006, 1007, 1008) nach Anspruch 1, wobei
das Anzeigefeld (100) ein Lichtabschirmungsmuster (130) umfasst, das in einem Randabschnitt davon angeordnet ist, und
das erste Lichtübertragungselement (210, 211, 212, 213, 214, 215, 216, 217, 218, 219), das Verbindungselement (300) und das Lichtabschirmungsmuster (130) einander wenigstens teilweise überlappen.

3. Anzeigevorrichtung (1000, 1001, 1002, 1003, 1004, 1005, 1006, 1007, 1008) nach Anspruch 1 oder 2, wobei
das erste Lichtübertragungselement (210, 211, 212, 213, 214, 215, 216, 217, 218, 219) eine Stabform aufweist, die sich in der ersten Richtung (X) erstreckt,
das erste Lichtübertragungselement (210, 211, 212, 213, 214, 215, 216, 217, 218, 219) direkt am Rahmenkörper (250, 251, 252, 253, 255, 259) anliegt, und
eine obere Oberfläche des ersten Lichtübertragungselements (210, 211, 212, 213, 214, 215, 216, 217, 218, 219) auf eine obere Oberfläche des Rahmenkörpers (250, 251, 252, 253, 255, 259) ausgerichtet ist und sich auf einer gleichen Ebene befindet, um eine ebene Oberfläche zu definieren.

4. Anzeigevorrichtung (1000, 1001, 1002, 1003, 1004, 1005, 1006, 1007, 1008) nach wenigstens einem der Ansprüche 1 bis 3, wobei das erste Lichtübertragungselement (210, 211, 212, 213, 214, 215, 216, 217, 218, 219) und der Rahmenkörper (250, 251, 252, 253, 255, 259) voneinander verschiedene Materialien umfassen.

5. Anzeigevorrichtung (1000, 1001, 1002, 1003, 1004, 1005, 1006, 1007, 1008) nach Anspruch 4, wobei
eine optische Dichte des ersten Lichtübertragungselements (210, 211, 212, 213, 214, 215, 216, 217, 218, 219) niedriger ist als eine optische Dichte des Rahmenkörpers (250, 251, 252, 253, 255, 259),
ein Brechungsindex des ersten Lichtübertragungselements (210, 211, 212, 213, 214, 215, 216, 217, 218, 219) größer ist als ein Brechungsindex des Rahmenkörpers (250, 251, 252, 253, 255, 259),
der Brechungsindex des ersten Lichtübertragungselements (210, 211, 212, 213, 214, 215, 216, 217, 218, 219) niedriger ist als ein Brechungsindex des Verbindungselements (300),
der Rahmenkörper (250, 251, 252, 253, 255, 259) Kunststoff, ein nichtmetallisches anorganisches Material oder Carbonfaser umfasst, das erste Lichtübertragungselement (210, 211, 212, 213, 214, 215, 216, 217, 218, 219) Polycarbonat, Polystyrol, Polymethylmethacrylat, Polyethylenterephthalat, Glas oder Quarz umfasst, und
das Verbindungselement (300) ein lichtgehärtetes Harz umfasst, und das erste Lichtübertragungselement (210, 211, 212, 213, 214, 215, 216, 217, 218, 219) direkt am Verbindungselement (300) anliegt.

6. Anzeigevorrichtung (1000, 1001, 1002, 1003, 1004, 1005, 1006, 1007, 1008) nach wenigstens einem der Ansprüche 1 bis 5, wobei der Rahmenkörper (250, 251, 252, 253, 255, 259) Folgendes umfasst:
Seitenwandabschnitte (250a, 251a, 252a, 253a, 255a), und vorspringende Abschnitte (250b, 251b, 252b, 253b, 255b), die sich ausgehend von den Seitenwandabschnitten (250a, 251a, 252a, 253a, 255a) erstrecken, um das Anzeigefeld (100) zu halten,
wobei sich der vertiefte Abschnitt (250t, 251t, 252t, 253t), der sich in der ersten Richtung (X) erstreckt, an einer oberen Oberfläche des vorspringenden Abschnitts (250b, 251b, 252b, 253b, 255b) definiert ist, und
wobei die obere Oberfläche des ersten Lichtübertragungselements (210, 211, 212, 213, 214, 215, 216, 217, 218, 219) freiliegt, ohne vom Rahmenkörper (250, 251, 252, 253, 255, 259) bedeckt zu sein.

7. Anzeigevorrichtung (1003) nach wenigstens einem der Ansprüche 1 bis 6, wobei
das erste Lichtübertragungselement (213) direkt am Rahmenkörper (253) anliegt, und
eine Rauigkeit einer Oberfläche des ersten Lichtübertragungselements (213), die den Rahmenkörper (253) berührt, größer ist als eine Rauigkeit der oberen Oberfläche des ersten Lichtübertragungselements (213).

8. Anzeigevorrichtung (1002) nach Anspruch 6 oder 7, wobei Seitenflächen des ersten Lichtübertragungselements (212) in Kontakt mit dem Rahmenkörper (252) sind und eine Neigung aufweisen.

9. Anzeigevorrichtung (1006) nach Anspruch 6, wobei
ein Frontende des ersten Lichtübertragungselements (216), das sich in der ersten Richtung (X) erstreckt, wenigstens teilweise freiliegt, ohne vom Rahmenkörper bedeckt zu sein,
das andere Frontende des ersten Lichtübertragungselements (216), das sich in der ersten Richtung (X) erstreckt, wenigstens teilweise freiliegt, ohne vom Rahmenkörper bedeckt zu sein,
das erste Lichtübertragungselement (216) lichtaussendende Muster umfasst, die an einer unteren Oberfläche definiert sind, und
eine Anordnungsdichte der lichtaussendenden Muster in einem mittigen Abschnitt des ersten Lichtübertragungselements (216) größer ist als eine Anordnungsdichte der lichtaussendenden Muster (216p) in einem Randabschnitt des ersten Lichtübertragungselements (216).

10. Anzeigevorrichtung (1004) nach Anspruch 6 oder 7, wobei ein Frontende des ersten Lichtübertragungselements (214), das sich in der ersten Richtung (X) erstreckt, wenigstens teilweise freiliegt, ohne vom Rahmenkörper bedeckt zu sein, das andere Frontende des ersten Lichtübertragungselements (214), das sich in der ersten Richtung (X) erstreckt, wenigstens teilweise freiliegt, ohne vom Rahmenkörper bedeckt zu sein, und
Dicken des einen Frontendes und des anderen Frontendes des ersten Lichtübertragungselements (214) größer sind als eine Dicke eines mittigen Abschnitts des ersten Lichtübertragungselements (214).

11. Anzeigevorrichtung (1008) nach Anspruch 6, wobei ein Frontende des ersten Lichtübertragungselements (218), das sich in der ersten Richtung (X) erstreckt, wenigstens teilweise freiliegt, ohne vom Rahmenkörper bedeckt zu sein,
das andere Frontende des ersten Lichtübertragungselements (218), das sich in der ersten Richtung (X) erstreckt, vom Rahmenkörper bedeckt ist, das erste Lichtübertragungselement (218) lichtaussendende Muster (218p) umfasst, die an einer unteren Oberfläche definiert sind, eine Anordnungsdichte der lichtaussendenden Muster (218p) in einer Nähe des anderen Frontendes des ersten Lichtübertragungselements (218) größer ist als eine Anordnungsdichte der lichtaussendenden Muster (218p) in einer Nähe des einen Frontendes des ersten Lichtübertragungselements (218).

12. Anzeigevorrichtung (1005) nach Anspruch 6 oder 7, wobei ein Frontende des ersten Lichtübertragungselements (215), das sich in der ersten Richtung (X) erstreckt, wenigstens teilweise freiliegt, ohne vom Rahmenkörper (255) bedeckt zu sein,
das andere Frontende des ersten Lichtübertragungselements (215), das sich in der ersten Richtung (X) erstreckt, vom Rahmenkörper (255) bedeckt ist, und
eine Dicke des einen Frontendes des ersten Lichtübertragungselements (215) größer ist als eine Dicke des anderen Frontendes des ersten Lichtübertragungselements (215).

13. Anzeigevorrichtung (1000, 1001, 1002, 1003, 1004, 1005, 1006, 1007, 1008) nach Anspruch 6, wobei
ein Frontende des ersten Lichtübertragungselements (210, 211, 212, 213, 214, 215, 216, 217, 218, 219), das sich in der ersten Richtung (X) erstreckt, wenigstens teilweise freiliegt, ohne vom Rahmenkörper (250, 251, 252, 253, 255, 259) bedeckt zu sein, und
eine freiliegende Seitenfläche des ersten Lichtübertragungselements (210, 211, 212, 213, 214, 215, 216, 217, 218, 219) an dem einen Frontende auf einer gleichen Ebene auf eine Außenfläche der Seitenwandabschnitte (250a, 251a, 252a, 253a, 255a) des Rahmenkörpers (250, 251, 252, 253, 255, 259) ausgerichtet ist, um eine ebene Oberfläche zu definieren.

14. Anzeigevorrichtung nach wenigstens einem der Ansprüche 1 bis 13, wobei der Formrahmen (209) ferner Folgendes umfasst:
ein zweites Lichtübertragungselement (239), das wenigstens teilweise in den vertieften Abschnitt eingefügt ist, sich in einer zweiten Richtung (Y) erstreckt, welche die erste Richtung (X) schneidet, und mit dem ersten Lichtübertragungselement (219) verbunden ist; und
ein reflektierendes Element (270), das Licht reflektiert, das sich in der ersten Richtung (X) im ersten Lichtübertragungselement (219) ausbreitet, und das es dem Licht erlaubt, auf das zweite Lichtübertragungselement (239) einzufallen,
wobei die obere Oberfläche des zweiten Lichtübertragungselements (239) freiliegt, ohne vom Rahmenkörper (259) bedeckt zu sein.

15. Formrahmen (200, 205, 209) umfassend:
einen Rahmenkörper (250, 251, 252, 253, 255, 259), der Folgendes umfasst:
Seitenwandabschnitte (250a, 251a, 252a, 253a, 255a); und
vorspringende Abschnitte (250b, 251b, 252b, 253b, 255b), die sich ausgehend von Innenwänden der Seitenwandabschnitte (250a, 251a, 252a, 253a, 255a) erstrecken und einen vertieften Abschnitt (250t, 251t, 252t, 253t) umfassen, wobei der vertiefte Abschnitt ein Einschnitt ist, der zwei gegenüberliegende Innenwände und eine Grundfläche aufweist; und
ein Lichtübertragungselement (210, 211, 212, 213, 214, 215, 216, 217, 218, 219, 230, 235, 239), das ein Material umfasst, das verschieden von einem Material des Rahmenkörpers (250, 251, 252, 253, 255, 259) ist, und das wenigstens teilweise in den vertieften Abschnitt (250t, 251t, 252t, 253t) eingefügt ist,
wobei wenigstens ein Teil der Seitenflächen und eine obere Oberfläche des Lichtübertragungselements (210, 211, 212, 213, 214, 215, 216, 217, 218, 219, 230, 235, 239) freiliegen, ohne vom Rahmenkörper (250, 251, 252, 253, 255, 259) bedeckt zu sein.

## Revendications

1. Dispositif d'affichage (1000, 1001, 1002, 1003, 1004, 1005, 1006, 1007, 1008) comprenant :
un panneau d'affichage (100) ;
un cadre de moule (200, 205, 209) qui supporte le panneau d'affichage (100), dans lequel le cadre de moule (200, 205, 209) comprend :
un corps de cadre (250, 251, 252, 253, 255, 259) comprenant une portion en retrait (250t, 251t, 252t, 253t), la portion en retrait étant une tranchée ayant deux parois intérieures en regard et une surface de base ; et
un premier organe de transmission de lumière (210, 211, 212, 213, 214, 215, 216, 217, 218, 219) s'étendant dans une première direction (X) et inséré au moins partiellement dans la portion en retrait (250t, 251t, 252t, 253t) ; et
un organe d'assemblage (300) qui accouple le panneau d'affichage (100) et le cadre de moule (200, 205, 209) l'un à l'autre,
dans lequel le premier organe de transmission de lumière (210, 211, 212, 213, 214, 215, 216, 217, 218, 219) et l'organe d'assemblage (300) se chevauchent l'un l'autre au moins partiellement,
dans lequel l'organe d'assemblage (300) est réalisé en un matériau photodurcissable, et
dans lequel le premier organe de transmission de lumière (210, 211, 212, 213, 214, 215, 216, 217, 218, 219) est en contact optique avec l'organe d'assemblage (300) et au moins une portion du premier organe de transmission de lumière (210, 211, 212, 213, 214, 215, 216, 217, 218, 219) est exposée à l'extérieur du dispositif après que le cadre de moule (200, 205, 209) et le panneau d'affichage (100) ont été assemblés.

2. Dispositif d'affichage (1000, 1001, 1002, 1003, 1004, 1005, 1006, 1007, 1008) selon la revendication 1, dans lequel
le panneau d'affichage (100) comprend un motif de protection contre la lumière (130) disposé dans une portion de bord de celui-ci, et
le premier organe de transmission de lumière (210, 211, 212, 213, 214, 215, 216, 217, 218, 219), l'organe d'assemblage (300) et le motif de protection contre la lumière (130) se chevauchent les uns les autres au moins partiellement.

3. Dispositif d'affichage (1000, 1001, 1002, 1003, 1004, 1005, 1006, 1007, 1008) selon la revendication 1 ou 2, dans lequel
le premier organe de transmission de lumière (210, 211, 212, 213, 214, 215, 216, 217, 218, 219) a une forme de barre s'étendant dans la première direction (X),
le premier organe de transmission de lumière (210, 211, 212, 213, 214, 215, 216, 217, 218, 219) bute directement sur le corps de cadre (250, 251, 252, 253, 255, 259), et
une surface supérieure du premier organe de transmission de lumière (210, 211, 212, 213, 214, 215, 216, 217, 218, 219) est alignée avec une surface supérieure du corps de cadre (250, 251, 252, 253, 255, 259) et sur un même plan pour définir une surface plate.

4. Dispositif d'affichage (1000, 1001, 1002, 1003, 1004, 1005, 1006, 1007, 1008) selon au moins l'une des revendications 1 à 3, dans lequel le premier organe de transmission de lumière (210, 211, 212, 213, 214, 215, 216, 217, 218, 219) et le corps de cadre (250, 251, 252, 253, 255, 259) comprennent l'un l'autre des matériaux différents.

5. Dispositif d'affichage (1000, 1001, 1002, 1003, 1004, 1005, 1006, 1007, 1008) selon la revendication 4, dans lequel
une densité optique du premier organe de transmission de lumière (210, 211, 212, 213, 214, 215, 216, 217, 218, 219) est inférieure à une densité optique du corps de cadre (250, 251, 252, 253, 255, 259),
un indice de réfraction du premier organe de transmission de lumière (210, 211, 212, 213, 214, 215, 216, 217, 218, 219) est supérieur à un indice de réfraction du corps de cadre (250, 251, 252, 253, 255, 259), l'indice de réfraction du premier organe de transmission de lumière (210, 211, 212, 213, 214, 215, 216, 217, 218, 219) est inférieur à un indice de réfraction de l'organe d'assemblage (300),
le corps de cadre (250, 251, 252, 253, 255, 259) comprend du plastique, un matériau inorganique non métallique ou de la fibre de carbone,
le premier organe de transmission de lumière (210, 211, 212, 213, 214, 215, 216, 217, 218, 219) comprend du polycarbonate, du polystyrène, du polyméthacrylate de méthyle, du polytéréphtalate d'éthylène, du verre ou du quartz, et
l'organe d'assemblage (300) comprend une résine photodurcie, et
le premier organe de transmission de lumière (210, 211, 212, 213, 214, 215, 216, 217, 218, 219) bute directement sur l'organe d'assemblage (300).

6. Dispositif d'affichage (1000, 1001, 1002, 1003, 1004, 1005, 1006, 1007, 1008) selon au moins l'une des revendications 1 à 5, dans lequel le corps de cadre (250, 251, 252, 253, 255, 259) comprend :
des portions de paroi de côté (250a, 251a, 252a, 253a, 255a), et
des portions saillantes (250b, 251b, 252b, 253b, 255b) s'étendant depuis les portions de paroi de côté (250a, 251a, 252a, 253a, 255a) pour supporter le panneau d'affichage (100),
dans lequel la portion en retrait (250t, 251t, 252t, 253t) s'étendant dans la première direction (X) est définie sur une surface supérieure de la portion saillante (250b, 251b, 252b, 253b, 255b), et
la surface supérieure du premier organe de transmission de lumière (210, 211, 212, 213, 214, 215, 216, 217, 218, 219) est exposée sans être couverte par le corps de cadre (250, 251, 252, 253, 255, 259).

7. Dispositif d'affichage (1003) selon au moins l'une des revendications 1 à 6, dans lequel
le premier organe de transmission de lumière (213) bute directement sur le corps de cadre (253), et
une rugosité d'une surface du premier organe de transmission de lumière (213), qui vient en contact avec le corps de cadre (253), est supérieure à une rugosité de la surface supérieure du premier organe de transmission de lumière (213).

8. Dispositif d'affichage (1002) selon la revendication 6 ou 7, dans lequel des surfaces de côté du premier organe de transmission de lumière (212) sont en contact avec le corps de cadre (252), et ont une pente.

9. Dispositif d'affichage (1006) selon la revendication 6, dans lequel
une extrémité avant du premier organe de transmission de lumière (216) s'étendant dans la première direction (X) est exposée au moins partiellement sans être couverte par le corps de cadre,
l'autre extrémité avant du premier organe de transmission de lumière (216) s'étendant dans la première direction (X) est exposée au moins partiellement sans être couverte par le corps de cadre,
le premier organe de transmission de lumière (216) comprend des motifs d'émission de lumière définis sur une surface inférieure, et
une densité d'agencement des motifs d'émission de lumière au niveau d'une portion centrale du premier organe de transmission de lumière (216) est supérieure à une densité d'agencement des motifs d'émission de lumière (216p) au niveau d'une portion de bord du premier organe de transmission de lumière (216).

10. Dispositif d'affichage (1004) selon la revendication 6 ou 7, dans lequel une extrémité avant du premier organe de transmission de lumière (214) s'étendant dans la première direction (X) est exposée au moins partiellement sans être couverte par le corps de cadre,
l'autre extrémité avant du premier organe de transmission de lumière (214) s'étendant dans la première direction (X) est exposée au moins partiellement, sans être couverte par le corps de cadre, et des épaisseurs de l'extrémité avant et de l'autre extrémité avant du premier organe de transmission de lumière (214) sont plus grandes qu'une épaisseur d'une portion centrale du premier organe de transmission de lumière (214).

11. Dispositif d'affichage (1008) selon la revendication 6, dans lequel
une extrémité avant du premier organe de transmission de lumière (218) s'étendant dans la première direction (X) est exposée au moins partiellement sans être couverte par le corps de cadre,
l'autre extrémité avant du premier organe de transmission de lumière (218) s'étendant dans la première direction (X) est couverte par le corps de cadre,
le premier organe de transmission de lumière (218) comprend des motifs d'émission de lumière (218p) définis sur une surface inférieure,
une densité d'agencement des motifs d'émission de lumière (218p) à proximité de l'autre extrémité avant du premier organe de transmission de lumière (218) est supérieure à une densité d'agencement des motifs d'émission de lumière (218p) à proximité de l'extrémité avant du premier organe de transmission de lumière (218).

12. Dispositif d'affichage (1005) selon la revendication 6 ou 7, dans lequel
une extrémité avant du premier organe de transmission de lumière (215) s'étendant dans la première direction (X) est exposée au moins partiellement sans être couverte par le corps de cadre (255),
l'autre extrémité avant du premier organe de transmission de lumière (215) s'étendant dans la première direction (X) est couverte par le corps de cadre (255), et
une épaisseur de l'extrémité avant du premier organe de transmission de lumière (215) est plus grande qu'une épaisseur de l'autre extrémité avant du premier organe de transmission de lumière (215).

13. Dispositif d'affichage (1000, 1001, 1002, 1003, 1004, 1005, 1006, 1007, 1008) selon la revendication 6, dans lequel
une extrémité avant du premier organe de transmission de lumière (210, 211, 212, 213, 214, 215, 216, 217, 218, 219) s'étendant dans la première direction (X) est exposée au moins partiellement sans être couverte par le corps de cadre (250, 251, 252, 253, 255, 259), et
une surface de côté exposée du premier organe de transmission de lumière (210, 211, 212, 213, 214, 215, 216, 217, 218, 219) au niveau de l'extrémité avant est alignée avec une surface extérieure des portions de paroi de côté (250a, 251a, 252a, 253a, 255a) du corps de cadre (250, 251, 252, 253, 255, 259) sur un même plan pour définir une surface plate.

14. Dispositif d'affichage selon au moins l'une des revendications 1 à 13, dans lequel le cadre de moule (209) comprend en outre :
un second organe de transmission de lumière (239) inséré au moins partiellement dans la portion en retrait, s'étend dans une seconde direction (Y) coupant la première direction (X), et raccordé au premier organe de transmission de lumière (219) ; et
un organe réfléchissant (270) qui réfléchit une lumière continuant dans la première direction (X) au sein du premier organe de transmission de lumière (219) et permet à la lumière d'être incidente sur le second organe de transmission de lumière (239),
dans lequel la surface supérieure du second organe de transmission de lumière (239) est exposée sans être couverte par le corps de cadre (259).

15. Cadre de moule (200, 205, 209) comprenant :
un corps de cadre (250, 251, 252, 253, 255, 259) qui comprend :
des portions de paroi de côté (250a, 251a, 252a, 253a, 255a) ; et
des portions saillantes (250b, 251b, 252b, 253b, 255b) s'étendant depuis des parois intérieures des portions de paroi de côté (250a, 251a, 252a, 253a, 255a) et comprenant une portion en retrait (250t, 251t, 252t, 253t), la portion en retrait étant une tranchée ayant deux parois intérieures en regard et une surface de base ; et
un organe de transmission de lumière (210, 211, 212, 213, 214, 215, 216, 217, 218, 219, 230, 235, 239) comprenant un matériau différent d'un matériau du corps de cadre (250, 251, 252, 253, 255, 259) et inséré au moins partiellement dans la portion en retrait (250t, 251t, 252t, 253t), dans lequel au moins une partie de surfaces de côté et une surface supérieure de l'organe de transmission de lumière (210, 211, 212, 213, 214, 215, 216, 217, 218, 219, 230, 235, 239) sont exposées sans être couvertes par le corps de cadre (250, 251, 252, 253, 255, 259).
